# EUROPÄISCHE PATENTSCHRIFT

(11) **EP 2 420 428 B1**
(45) Veröffentlichungstag und Bekanntmachung des Hinweises auf die Patenterteilung: **26.02.2014**
(21) Anmeldenummer: 10008567.9
(22) Anmeldetag: 17.08.2010
(51) Int. Cl.: B62B 7/06, B62B 7/08

(54) **Schwenklager und Fahrgestell, insbesondere Kinderwagengestell, enthaltend das Schwenklager**
Pivot bearing and frame, in particular pram chassis, containing the pivot bearing
Pivot et châssis, notamment structure de poussette, comprenant le pivot

(43) Veröffentlichungstag der Anmeldung: 22.02.2012
(73) Patentinhaber: Europe Brands S.à r.l., 2086 Luxembourg (LU)
(72) Erfinder: Neumann, Ulrich Dipl.-Ing., 32657 Lemgo (DE); Minnig, Peter Dipl.-Ing., 32049 Herford (DE)
(74) Vertreter: Metten, Karl-Heinz

(56) Entgegenhaltungen:
- EP-A2- 1 647 463
- EP-A2- 1 762 459
- WO-A1-2004/052710
- US-A1- 2006 071 451

## Beschreibung

Die vorliegende Erfindung betrifft ein Schwenklager gemäß dem Oberbegriff von Anspruch 1, insbesondere für ein Kinderwagengestell, ein Fahrgestell, insbesondere Kinderwagengestell, enthaltend mindestens ein solches Schwenklager, sowie die Verwendung dieses Schwenklagers für Fahrgestelle.

Zusammenklappbare Kinderwagengestelle sind seit langem bekannt. Sie ermöglichen es, Kinderwagen platzsparend zu verstauen und zu transportieren. Eine Ausführungsform eines zusammenklappbaren Kinderwagengestells findet sich zum Beispiel in der DE 699 26 041 T2 beschrieben.

Bei dem in der gattungsgemäßen EP 1 762 459 A2 wiedergegebenen zusammenklappbaren Kinderwagengestell werden durch ein Herunterdrücken der Schiebergriffstangen, das heißt durch ein Verschwenken derselben in Richtung der Hinterradstützstreben die Vorderradstützstreben ebenfalls in Richtung auf diese Hinterradstützstreben geklappt. Dabei sind die Schieberstangen mit der Vorderradstütze über ein Getriebe derart verschwenkbar gekoppelt, dass bei einem Verschwenken des Schiebebügels in Richtung der Hinterradstützstrebe eine gegenläufige Verschwenkung der Vorderradstützstrebe erfolgt. Das Koppelgetriebe verfügt über zwei ineinander greifende Zahnradelemente, von denen eines mit dem Schiebebügel und das andere mit der Vorderachsverstrebung verbunden ist.

Aus der DE 20 2009 005 043 U1 geht ein Drehgelenk mit einer Rastsperre zum schwenkbeweglichen Verbinden mindestens zweier Kinderwagenstützstreben hervor. Dieses Drehgelenk umfasst mindestens ein erstes und mindestens ein zweites Drehgelenkelement, wobei das zweite Drehgelenkelement an einem Ringflansch, der konzentrisch in einer Lagerschale im ersten Drehgelenkelement drehbar gelagert ist, am Umfang mindestens eine Lagerstelle für eine schwenkbare Sperrklinke aufweist, die durch die Kraft einer Feder mit mindestens einer als Rastelement vorgesehenen Rastnase sich an der Innenfläche der Lagerschale des ersten Drehgelenkelements abstützt. Das erste Drehgelenkelement hat in der Lagerschale über einen definierten Schwenkwinkelbereich keine Innenverzahnung aufzuweisen. In mindestens eine Gruppe von nebeneinander liegenden Verzahnungen hat die Sperrklinke mit der Rastnase in einer entsprechenden Verdrehstellung des zweiten Drehgelenkelements relativ zu dem ersten Drehgelenkelement einzurasten bzw. anzuschlagen. Schließlich hat an dem zweiten Drehgelenkelement außenseitig aus der scheibenförmigen Abdeckwand vorstehend in mindestens einem Längsdurchbruch ein Tastknopf mit mindestens einer Ausrückschräge gegen die Kraft einer Feder verschiebbar gelagert zu sein, wobei die Feder auf die Sperrklinke beim Betätigen derart wirkt, dass die Rastnase aus der Verzahnung ausrückt, wodurch das zweite Drehgelenkelement gegenüber dem ersten verdrehbar wird. Auf diese Weise soll ein Drehgelenk verfügbar werden, dass einerseits eine Feinverstellung ermöglicht und andererseits dennoch eine leichte Verstellung und einen sicheren Halt gewährleistet.

Die DE 20 2008 013 777 U1 betrifft ein Drehgelenk für einen Kinderwagen mit mindestens zwei hintereinander liegenden Gelenkelementen, die durch ein zylindrisches, axial verschiebbares Verriegelungselement mit einer Außenverzahnung, die mit einer Innenverzahnung in Eingriff steht, gegen Verdrehen gesichert sind. Die Außenverzahnung des Verriegelungselements ist so breit, dass jeweils die Innenverzahnungen von mindestens zwei Anschlussteilen in der Verriegelungsstellung überbrückt und aus einem Gelenkelement vollständig in das benachbarte verschiebbar sind. Das Verriegelungselement wird von einer Druckfeder an der einen Seite und von einem verschiebbaren Stößel oder von einer Drucktaste auf der anderen Seite abgestützt. Der Stößel oder die Drucktaste sind in der gedrückten Stellung mittels einer lösbaren Arretiereinrichtung an dem Gelenkelement fixierbar. Mit dieser Vorrichtung soll ein relatives Verschwenken eines Gelenkelements gegenüber einem weiteren Gelenkelement gelingen, ohne dass man einen Stößel oder eine Drucktaste gleichzeitig niederzuhalten hat.

Aus der WO 2009/132985 A1 geht ein zusammenklappbarer Schiebewagen für Kinder oder Puppen mit einem zusammenklappbaren Gestell hervor, umfassend ein erstes und ein zweites Schwenklager, die über ein Kopplungsgetriebe miteinander in Wirkverbindung stehen, das derart ausgelegt ist, dass beim Vorschwenken der Schiebestange in Richtung der vorderen Stützstrebe durch Drehbewegungstransformation die hintere Stützstrebe automatisch nach vorne in Richtung des Vorderrads verschwenkt wird. Das Kopplungsgetriebe hat eine auf der Schwenkachse des ersten Schwenklagers für die Schiebestange drehbar gelagerte Scheibe mit mindestens partiell am Scheibenumfang vorgesehenen Ritzeln aufzuweisen, die über einen an der Schiebestange befestigten Mitnehmer beim Drehen der Schiebestange mitdrehbar ist. Das Ritzel greift dabei in eine konturenangepasste Verzahnung eines mindestens segmentierten Zahnkranzes an der hinteren Stützstrebe ein. Die hintere Stützstrebe ist am Zahnkranz und dieser wiederum am zweiten Schwenklager befestigt. Der zusammenklappbare Schiebewagen für Kinder oder Puppen gemäß WO 2009/132985 soll über eine sehr stabile Klappmechanik verfügen, die gleichwohl einfach gestaltet ist und eine einfache Bedienung beim Verbringen eines aufgestellten Wagengestells in eine zusammengeklappte Verstauposition sicherstellt.

Die aus dem Stand der Technik bekannten zusammenklappbaren Kinderwagengestelle sind noch stets mit Nachteilen behaftet.

Der vorliegenden Erfindung hat daher die Aufgabe zu Grunde gelegen, Schwenklager für zusammenklappbare Kinderwagengestelle zur Verfügung zu stellen, die nicht mehr mit den Nachteilen des Stands der Technik behaftet sind und die insbesondere in bedienfreundlicher Weise einfach und sicher zusammenklappbar und auch wieder entfaltbar sind und die vorzugsweise im zusammengeklappten Zustand ein geringst mögliches Stauvolumen einnehmen und sicher in kompakter Form gelagert werden können.

Demgemäß wurde ein Schwenklager gemäß Anspruch 1, insbesondere für ein Fahrgestell, z.B. Kinderwagengestell, gefunden,
umfassend eine erste Gehäusehälftenabdeckung mit einer Innen- und einer Außenseite, umfassend einen ersten und einen zweiten Teilabschnitt und enthaltend ein erstes Aufnahmeteil oder verbunden bzw. verbindbar mit einem ersten Aufnahmeteil für eine erste Strebe, insbesondere vordere Stützstrebe eines Fahr- bzw. Kinderwagengestells, und, vorliegend oder angebracht oder anbringbar an bzw. auf der Innenseite beabstandet voneinander vorliegende erste und zweite Einrichtungen, geeignet und ausgelegt zur Ausbildung im Wesentlichen gleichgerichteter erster und zweiter Achsen, insbesondere umfassend mindestens ein erstes bzw. zweites Verbindungselement und/oder mindestens ein erstes bzw. zweites Lagerelement, z.B. erste und zweite im Wesentlichen gleichgerichtete Hülsen und/oder Wellenstummel;
eine zweite Gehäusehälftenabdeckung, die geeignet und ausgelegt ist, um mit dem ersten Teilabschnitt der ersten Gehäusehälftenabdeckung ein erstes Teilgehäuse zu bilden, mit einer Innenund einer Außenseite, enthaltend ein zweites oder verbunden bzw. verbindbar mit einem zweiten Aufnahmeteil für eine zweite Strebe, insbesondere Schieberstange eines Fahr- bzw. Kinderwagengestells, und eine, vorliegend oder angebracht oder anbringbar an bzw. auf der Innenseite, dritte Einrichtung, insbesondere umfassend ein drittes Verbindungs- oder Lagerelement, z.B. eine dritte Hülse oder einen dritten Wellenstummel oder eine erste Anlage- und/oder Arretierungsfläche für die erste Hülse oder den ersten Wellenstummel, geeignet und ausgelegt, um zusammen mit der ersten Einrichtung, insbesondere mit dem ersten Wellenstummel bzw. der ersten Hülse, die erste Achse zu bilden;
eine dritte Gehäusehälftenabdeckung, die geeignet und ausgelegt ist, um mit dem zweiten Teilabschnitt der ersten Gehäusehälftenabdeckung ein zweites Teilgehäuse zu bilden, mit einer Innenund einer Außenseite, enthaltend ein drittes oder verbunden bzw. verbindbar mit einem dritten Aufnahmeteil für eine dritte Strebe, insbesondere eine hintere Stützstrebe eines Fahr- bzw. Kinderwagengestells, und eine, vorliegend oder angebracht oder anbringbar an bzw. auf der Innenseite, vierte Einrichtung, insbesondere umfassend ein viertes Verbindungs- oder Lagerelement, z.B. eine vierte Hülse oder einen vierten Wellenstummel oder eine zweite Anlage- und/oder Arretierungsfläche für die zweite Hülse oder den zweiten Wellenstummel, geeignet und ausgelegt, um zusammen mit der zweiten Einrichtung, insbesondere mit dem zweiten Wellenstummel bzw. der zweiten Hülse, die zweite Achse zu bilden;
wobei auf der ersten Achse in der Reihenfolge wie nachfolgend aufgeführt beginnend von der Innenseite der ersten Gehäusehälftenabdeckung in Richtung auf die Innenseite der zweiten Gehäusehälftenabdeckung, vorliegen: mindestens eine erste Druckfeder, eine erste Rastscheibe mit einer ersten Entkopplungsvorrichtung, insbesondere zur reversiblen Verriegelung der zweiten Strebe relativ zu der ersten Strebe, eine erste Zahnradscheibe, eine erste Auslöserzahnradscheibe, die mit einer ersten Betätigungsvorrichtung, insbesondere für einen Seil- und Bowdenzug, ausgestattet ist, und ein Auslöser für die Drehbewegung der zweiten Strebe, ausgestattet mit einer zweiten Betätigungsvorrichtung, insbesondere für einen Seil- oder Bowdenzug, und mit mindestens einer ersten Entriegelungsvorrichtung, die mit der ersten Entkopplungsvorrichtung der ersten Rastscheibe, insbesondere reversibel; in Wechselwirkung bringbar ist;
wobei auf der zweiten Achse in der Reihenfolge wie nachfolgend aufgeführt, beginnend von der Innenseite der ersten Gehäusehälftenabdeckung in Richtung auf die Innenseite der dritten Gehäusehälftenabedeckung, vorliegen: mindestens eine zweite Druckfeder, eine zweite Rastscheibe mit einer zweiten Entkopplungsvorrichtung, insbesondere zur reversiblen Verriegelung der dritten Strebe relativ zu der ersten Strebe, eine zweite Zahnradscheibe und eine zweite Auslöserzahnradscheibe;
wobei die erste Zahnradscheibe mit der zweiten Gehäusehälftenabdeckung verbunden ist, wobei die zweite Zahnradscheibe mit der dritten Gehäusehälftenabdeckung verbunden ist, wobei die erste Rastscheibe über die erste Entkopplungsvorrichtung in Wirkverbindung mit dem Auslöser steht und wobei die zweite Rastscheibe über die zweite Entkopplungsvorrichtung in Wirkverbindung mit der zweiten Auslöserzahnradscheibe steht.

In einer zweckmäßigen Ausgestaltung kann vorgesehen sein, dass die erste Auslöserzahnradscheibe mit der zweiten Auslöserzahnradscheibe in Wechselwirkung bringbar ist, insbesondere wenn die erste Rastscheibe und die erste Zahnradscheibe entriegelt bzw. entkoppelt sind. Ferner kann vorgesehen sein, dass die erste Zahnradscheibe und die zweite Zahnradscheibe in Wechselwirkung bringbar sind, insbesondere wenn die zweite Rastscheibe und die zweite Zahnradscheibe entriegelt bzw. entkoppelt sind.

Die erste und die dritte Einrichtung, auch Achsbildungseinrichtung genannt, bzw. die zweite und die vierte Einrichtung, auch Achsbildungseinrichtung genannt, können z.B. eine Hülse/Dom-Kombination, eine Dorn-/Hülsekombination, oder eine Schraubengewinde/Schraube- oder Schraube/Schraubengewinde-Kombination darstellen. Auch ist es möglich, die erste oder zweite Achse durch eine erste und dritte Einrichtung bzw. durch eine zweite und vierte Einrichtung zu erhalten, bei denen über einen oder zwei Dome eine Hülse unter Ausbildung einer Achse gestülpt oder stülpbar ist. Alternativ können die erste und dritte Einrichtung bzw. die zweite und vierte Einrichtung auch eine Schraube bzw. Schrauben und eine Hülse umfassen, wobei die Hülse auf der Schraube montiert ist, um die genannte Achse bzw. Drehachse zu erhalten. Anstelle einer Schraube oder dergleichen kann selbstverständlich auch ein Niet für die Anbringung bzw. Lagerung der Hülse verwendet werden. Hierbei können z.B. die Hülse und der Dorn auch als Lagerelement und die Schraube, der Niet und der Dorn als Verbindungselement aufgefasst werden.

Demgemäß können erste, zweite, dritte und vierte Einrichtung Lager- und Verbindungselemente darstellen für die Ausbildung von erster bzw. zweiter Achse.

Des weiteren kann das erfindungsgemäße Schwenklager derart ausgebildet sein, dass die erste Einrichtung zur Ausbildung der ersten Achse im ersten Teilabschnitt und dass die zweite Einrichtung zur Ausbildung der zweiten Achse im zweiten Teilabschnitt vorliegt.

Bevorzugt ist die erste Achse im ersten Teilabschnitt und die zweite Achse im zweiten Teilabschnitt der ersten Gehäusehälftenabdeckung vorgesehen.

Des weiteren kann vorgesehen sein, dass zumindest die erste Gehäusehälftenabdeckung und/oder die erste Zahnradscheibe zumindest teilweise aus einem Metall, insbesondere Aluminium oder Magnesium, z.B. Magnesiumdruckguss, gefertigt sind. Selbstverständlich können auch sämtliche Gehäusehälftenabdeckungen des erfindungsgemäßen Schwenklagers teilweise oder vollständig aus einem Metall gefertigt sein. In einer bevorzugten Ausgestaltung ist einzig die erste Gehäusehälftenabdeckung partiell oder vollständig aus einem Metall, insbesondere Aluminium oder Magnesium, gefertigt. Für nicht aus Metall oder Metalllegierungen gefertigte Bauteile kann bei dem erfindungsgemäßen Schwenklager ohne weiteres auf solche aus Kunststoffmaterialien, beispielsweise aus faserverstärkten Kunststoffmaterialien, zurückgegriffen werden.

Bei Fahrgestellen, insbesondere Kinderwagengestellen, liegt die erste Gehäusehälftenabdeckung vorzugsweise dem Inneren des Fahrgestells bzw. dem Sitz oder der Liegewanne zugewandt vor.

Ferner kann vorgesehen sein, dass das erste Aufnahmeteil Bestandteil oder verbunden bzw. verbindbar mit dem ersten Teilabschnitt ist. Dieses Aufnahmeteil nimmt vorzugsweise die Vorderstrebe eines Fahrgestells, insbesondere Kinderwagens, auf.

Der erste Teilabschnitt der ersten Gehäusehälftenabdeckung ist vorzugsweise mit einem Aufnahmeteil ausgestattet, das den Schwenkschieber bzw. die Schwenkschieberstrebe aufnimmt, und der zweite Teilabschnitt der ersten Gehäusehälftenabdeckung ist vorzugsweise mit einem Aufnahmeteil ausgestattet, das die Stützstrebe für das Hinterrad aufnimmt.

Der erste und der zweite Teilabschnitt der ersten Gehäusehälftenabdeckung sind vorzugsweise einstückig gefertigt. Besonders bevorzugt liegt die erste Gehäusehälftenabdeckung einstückig vor. In einer bevorzugten Ausgestaltung ist die erste Gehäusehälftenabdeckung des erfindungsgemäßen Schwenklagers derart konzipiert, dass sie maßgeblich zur Stabilität des gesamten Schwenklagers beiträgt.

Erfindungsgemäße Schwenklager können überdies vorsehen, dass die der Innenseite der ersten Gehäusehälftenabdeckung abgewandte Seite der ersten Rastscheibe mindestens über eine, vorzugsweise mindestens drei, erste Ausbuchtungen oder Einkerbungen bzw. Einlässe verfügt und dass die benachbarte Seite der ersten Zahnradscheibe mit mindestens einer, vorzugsweise mindestens drei, hierzu komplementären Einkerbungen bzw. Ausbuchtungen ausgestattet ist, die miteinander in Eingriff bringbar sind. Zwei benachbarte Einkerbungen oder Ausbuchtungen nehmen regelmäßig relativ zueinander einen Winkel größer 0° ein.

Die ersten Ausbuchtungen bzw. Einkerbungen der ersten Rastscheibe sowie die hierzu komplementären Einkerbungen bzw. Ausbuchtungen der ersten Zahnradscheibe verfügen vorzugsweise über im Wesentlichen passgenaue Gegenformen. In anderen Worten, die erste Ausbuchtung der ersten Rastscheibe lässt sich in die hierzu komplementäre Einkerbung der ersten Zahnradscheibe einführen bzw. einfügen. Die ersten Ausbuchtungen bzw. Einkerbungen erstrecken sich vorzugsweise radial, z.B. ausgehend vom oder benachbart zum Aufnahmeloch der ersten Achse bis zum bzw. benachbart zum äußeren Rand der ersten Rastscheibe und sind vorzugsweise im wesentlichen geradlinig angeordnet. Solche benachbarten Einkerbungen schließen einen Winkel ein, der vorzugsweise im Bereich von 70 bis 120° liegt.

Bei den erfindungsgemäßen Schwenklagern kann ferner vorgesehen sein, dass die zweite Rastscheibe auf der der Innenseite des ersten Gehäusehälftenabdeckung abgewandten Seite mindestens eine, vorzugsweise mindestens drei, zweite Ausbuchtungen oder Einkerbungen bzw. Einlässe aufweist und dass die dieser Seite zugewandte Seite der zweiten Zahnradscheibe mit mindestens eine, vorzugsweise
mindestens drei, hierzu komplementären Ausbuchtungen bzw. Einkerbungen ausgestattet ist, die miteinander in Eingriff bringbar sind. Zwei benachbarte Einkerbungen oder Ausbuchtungen nehmen regelmäßig relativ zueinander einen Winkel größer 0° ein. Einkerbungen bzw. die dazu komplementären Ausbuchtungen können z.B. die Form von Halbzylindern, Halbkugeln, Kreisbögen oder dergleichen einnehmen.

Darüber hinaus ist es möglich, auf der ersten und/oder der zweiten Rastscheibe nur eine einzige Ausbuchtung bzw. einen einzigen Einlass vorzusehen. Dieses erfordert regelmäßig, um mehrere Rastpositionen zu erhalten, dass eine Vielzahl an hierzu korrespondierenden Einlässe bzw. Ausbuchtungen auf der ersten bzw. zweiten Zahnradscheibe vorliegen.

In einer bevorzugten Ausgestaltung kann vorgesehen sein, dass mindestens ein durch zwei benachbarte erste Einkerbungen/Einlässe bzw. Ausbuchtungen gebildeter Schwenkwinkel im Bereich von 75° bis 150° und vorzugsweise von 80° bis 120°, sowie besonders bevorzugt von 90° bis 110° und insbesondere im Bereich von 95° bis 105° liegt. Über die relative Anordnung von benachbarten ersten Einkerbungen bzw. Ausbuchtungen, die in hierzu komplementäre Ausbuchtungen bzw. Einkerbungen der benachbarten Seite der ersten Zahnradscheibe eingreifen, kann letztendlich in einer zweckmäßigen Ausgestaltung der Winkel festgelegt werden, den die ersten, zweiten und dritten Aufnahmeteile relativ zueinander einnehmen können. Bevorzugt sind die Ausbuchtungen und die hierzu komplementären Einkerbungen radial ausgerichtet, beispielsweise in Form von Halbzylindern oder Quadern.

Die Ausführungen zu den Ausbuchtungen und Einkerbungen/Einlässe der ersten Rastscheibe sowie zu den hierzu komplementären Einkerbungen/Einlässen bzw. Ausbuchtungen der ersten Zahnradscheibe gelten für die Ausbuchtungen und Einkerbungen/Einlässe der zweiten Rastscheibe und die hierzu komplementären Ausbuchtungen bzw. Einkerbungen/Einlässe der zweiten Zahnradscheibe entsprechend.

Erfindungsgemäße Schwenklager können überdies vorsehen, dass das erste Zahnrad ein Teilzahnrad darstellt, vorzugsweise auf seinem Umfang Zahnräder entlang eines Mittelpunktwinkels im Bereich von 30° bis 60°, insbesondere im Bereich von 35° bis 50°, aufweist, und/oder dass das zweite Zahnrad ein Vollzahnrad oder ein Teilzahnrad, das auf seinem Umfang Zahnräder vorzugsweise entlang eines Mittelpunktwinkels im Bereich von 30 ° bis 60°, insbesondere im Bereich von 35° bis 50°, aufweist, darstellt.

Bei den erfindungsgemäßen Schwenklagern kann des weiteren vorgesehen sein, dass die erste Auslöserzahnradscheibe ein Teilzahnrad darstellt, das vorzugsweise auf seinem Umfang Zahnradzähne entlang eines Mittelpunktwinkels im Bereich von 30 ° bis 60°, insbesondere im Bereich von 35° bis 50°, aufweist und/oder dass die zweite Auslöserzahnradscheibe ein Vollzahnrad oder ein Teilzahnrad, das vorzugsweise auf seinem Umfang Zahnräder entlang eines Mittelpunktwinkels im Bereich von 30° bis 60°, insbesondere im Bereich von 35° bis 50°, aufweist, darstellt.

In einer Weiterentwicklung des erfindungsgemäßen Schwenklagers befindet sich die erste Betätigungs- bzw. Befestigungsvorrichtung für einen Seil- bzw. Bowdenzug auf der Seite der ersten Auslöserzahnradscheibe, die der Innenseite der ersten Gehäusehälftenabdeckung abgewandt ist.

In einer weiteren Ausgestaltung verfügt die erste Auslöserzahnradscheibe des erfindungsgemäßen Schwenklagers auf derjenigen Seite, die der Innenseite der ersten Gehäusehälftenabdeckung abgewandt ist, über eine Mitnehmervorrichtung, die ausgelegt und angeordnet ist, um in Wechselwirkung mit der zweiten Betätigungs- bzw. Befestigungsvorrichtung des Auslösers zu treten.

Ferner kann vorgesehen sein, dass die erste Zahnradscheibe über mindestens zwei erste Anbindungsstellen beabstandet an der Innenseite der zweiten Gehäusehälftenabdeckung unverdrehbar über Befestigungsmittel, insbesondere Bolzen oder Raststifte, befestigt oder befestigbar ist. Zweckmäßigerweise wird z.B. auf vier, vorzugsweise gleich weit voneinander beabstandete Anbindungsstellen zurückgegriffen. Selbstverständlich ist es auch möglich, die erste und/oder die zweite Zahnradscheibe nur mit maximal drei Anbindungsstellen über entsprechende Betätigungsmittel an der zweiten bzw. dritten Gehäusehälftenabdeckung zu befestigen. Auf diese Weise werden vergrößerte Durchstöße resultieren sowie ein damit einhergehender vergrößerter Drehwinkel um die Achse.

Auch kann vorgesehen sein, dass an der Seite der ersten Zahnradscheibe, die der Innenseite der zweiten Gehäusehälfte zugewandt ist, Abstandshalter, insbesondere benachbart zum Umfang der ersten Zahnradscheibe, vorliegen, die vorzugsweise geeignet und ausgelegt sind, um Befestigungsmittel aufzunehmen.

Es ist ebenfalls möglich, dass die erste Rastscheibe verdrehsicher mit, insbesondere dem ersten Teilabschnitt, der ersten Gehäusehälftenabdeckung verbunden sowie axial reversibel verschiebbar auf der ersten Achse angeordnet ist.

Auch kann vorgesehen sein, dass die zweite Rastscheibe verdrehsicher mit, insbesondere dem zweiten Teilabschnitt, der ersten Gehäusehälftenabdeckung verbunden sowie axial reversibel verschiebbar auf der zweiten Achse angeordnet ist.

Erfindungsgemäße Schwenklager können des weiteren vorsehen, dass die erste Auslöserzahnradscheibe benachbart zum Umfang mindestens zwei, insbesondere vier, erste Durchstöße aufweist, wobei durch jeweils einen ersten Durchstoß ein erster Abstandshalter hindurchtritt und wobei diese ersten Durchstöße derart ausgebildet sind, dass die erste Auslöserzahnradscheibe um die erste Achse partiell rotierbar ist.

Hierbei ist besonders bevorzugt, wenn die Durchstöße in Anzahl, Größe und/oder Form derart ausgebildet und dass die hierzu korrespondierenden Abstandshalter derart auf der ersten Zahnradscheibe angeordnet sind, dass die erste Auslöserzahnradscheibe mindestens um einen Umfangswinkel von 25°, insbesondere von 25° bis 60° und besonders bevorzugt von 35° bis 50°, beispielsweise 42°, um die erste Achse verdrehbar ist.

Erfindungsgemäße Schwenklager können darüber hinaus dadurch gekennzeichnet sein, dass die zweite Auslöserzahnradscheibe benachbart zum Umfang mindestens zwei, insbesondere vier, zweite Durchstöße aufweist, wobei durch jeweils einen zweiten Durchstoß ein zweiter Abstandshalter hindurchtritt und wobei diese zweiten Durchstöße derart ausgebildet sind, dass die zweite Auslöserzahnradscheibe um die zweite Achse partiell rotierbar ist.

Hierbei ist besonders bevorzugt, wenn die zweiten Durchstöße in Anzahl, Größe und/oder Form derart ausgebildet und dass die zweiten Abstandshalter derart auf der zweiten Zahnradscheibe angeordnet sind, dass die zweite Auslöserzahnradscheibe mindestens um einen Umfangswinkel von 25°, insbesondere von 25° bis 60° und besonders bevorzugt von 35° bis 50°, beispielsweise 42°, um die zweite Achse verdrehbar ist.

In einer weiteren Ausgestaltung des erfindungsgemäßen Schwenklagers kann vorgesehen sein, dass die erste Entriegelungsvorrichtung auf der Seite des Auslösers vorliegt, die der ersten Rastscheibe zugewandt ist, und eine Abfolge umlaufender abgeschrägter Entriegelungszähne, insbesondere sieben abgeschrägte Entriegelungszähne, aufweist. Bei der Abfolge umlaufender abgeschrägter Entriegelungszähne kann es sich um einen Zahnkranz handeln, z.B. um einen Zahnkranz mit schräger Zahnung. Ein solcher Zahnkranz kann selbstverständlich auch nur segmentiert verzahnt sein. Es hat sich als besonders vorteilhaft erwiesen, dass der/die abgeschrägten Entriegelungszähne mit der die abgeschrägten Auflageflächen der ersten Entkopplungsvorrichtung in der Weise wechselwirkt, dass diese abgeschrägten Entriegelungszähne jeweils über die abgeschrägten Auflageflächen der ersten Entkopplungsvorrichtung bei Betätigung des Auslösers entlang wandern, ohne jedoch über das Ende der abgeschrägten Auflagefläche hinaus zu gelangen. D.h. der Auslöser wird nur in einem Maße um die erste Achse gedreht, dass dessen Entriegelungszähne stets nur mit den hierzu korrespondierenden abgeschrägten Auflageflächen der ersten Entkopplungsvorrichtung wechselwirken, ein Überspringen der Entriegelungszähne auf die jeweils nächstfolgende abgeschrägte Auflagefläche der ersten Entkopplungsvorrichtung tritt damit
gerade nicht ein. Durch diese Wechselwirkung von abgeschrägten Entriegelungszähnen des Auslösers mit den abgeschrägten Auflageflächen der ersten Entkopplungsvorrichtung werden die Ausbuchtungen der ersten Rastscheibe aus den komplementären Einkerbungen bzw. Einlässen der ersten Zahnradscheibe bzw. die Ausbuchtungen der ersten Zahnradscheibe aus den komplementären Einkerbungen der ersten Rastscheibe herausgedrückt, so dass die erste Rastscheibe und die erste Zahnradscheibe relativ zueinander verdreht werden können. Dieser Verdrehvorgang wird dadurch erleichtert, dass die Ausbuchtungen und/oder Einkerbungen bzw. Einlässen in Drehrichtung zumindest abschnittsweise abgeschrägte bzw. abgerundete Auflageflächen aufweisen. Hierdurch gelingt es besonders effizient, die Ausbuchtungen vollständig aus den komplementären Einkerbungen bzw. Einlässen herauszubewegen.

Die ersten und/oder zweiten Ausbuchtungen von erster bzw. zweiter Rastscheibe des erfindungsgemäßen Schwenklagers können demgemäß jeweils benachbart zur maximalen Ausdehnung der Ausbuchtung in Drehrichtung über mindestens eine abgeschrägte Fläche verfügen. Eine solche Ausgestaltung der ersten und zweiten Ausbuchtungen von erster bzw. zweiter Rastscheibe ist bevorzugt.

Auch kann die Innenseite der zweiten Gehäusehälftenabdeckung des erfindungsgemäßen Schwenklagers über einen ersten Anschlag für die zweite Betätigungs- bzw. Befestigungsvorrichtung verfügen.

Das erfindungsgemäße Schwenklager kann des weiteren vorsehen, dass der Auslöser beabstandet von der zweiten Betätigungs- bzw. Befestigungsvorrichtung eine erste Betätigungs- bzw. Befestigungsvorrichtung aufweist, die mit einem an der die Innenseite der zweiten Gehäusehälftenabdeckung befestigbaren oder befestigten elastischen Mittel, z.B. einer Zug-, Druck- oder Drehfeder, verbindbar oder verbunden ist. Darüber hinaus ist es ebenfalls möglich, dass zweite Auslöserzahnrad mit elastischen Mitteln, beispielsweise einer Druck-, Zug- oder Drehfeder, an der dritten Gehäusehälftenabdeckung zu befestigen, ähnlich wie das erste Auslöserzahnrad mit der zweiten Gehäusehälftenabdeckung elastisch verbunden werden kann.

Hierbei sind solche Schwenklager bevorzugt, bei denen die abgeschrägten Entriegelungszähne des Zahnkranzes auf einem Umfang, insbesondere Kreisumfang, angeordnet sind und die Steigung der Schrägen in der Weise zunimmt, dass bei einer durch Betätigung des Seil- oder Bowdenzugs, der mit der zweiten Betätigungs- bzw. Befestigungsvorrichtung in Wirkverbindung steht, der Auslöser auf der ersten Achse derart rotiert, dass die Schräge sich in Drehrichtung bewegt und dass der Hochpunkt der Schräge in Richtung der Position des Tiefpunkts der zugehörigen Schräge läuft, die dieser zuvor eingenommen hat.

Das erfindungsgemäße Schwenklager kann in einer Ausgestaltung vorsehen, dass die erste und die zweite Zahnradscheibe in der Weise in einer ersten Ebene liegen, dass bei Drehbewegung der ersten Zahnradscheibe die Zähne derselben mit den Zähnen der zweiten Zahnradscheibe in Einriff bringbar sind.

Überdies kann vorgesehen sein, dass die erste und die zweite Auslöserzahnradscheibe in der Weise in einer zweiten Ebene liegen, dass bei Drehbewegung der ersten Auslöserzahnradscheibe die Zähne derselben mit den Zähnen der zweiten Auslöserzahnradscheibe in Eingriff bringbar sind.

Im zusammengefalteten Zustand erlaubt es das erfindungsgemäße Schwenklager, dass die Schieberstrebe, die Vorderradstützstrebe und die Hinterradstützstrebe im Wesentlichen parallel zueinander angeordnet sind. In einer zweckmäßigen Ausgestaltung sind in diesem vollständig gefalteten Zustand erste Rastscheibe und erste Zahnradscheibe sowie zweite Rastscheibe und zweite Zahnradscheibe im entriegelten bzw. entkoppelten Zustand. Selbstverständlich ist es ebenfalls möglich, dass in diesem vollständig gefalteten Zustand erste Rastscheibe und/oder erste Zahnradscheibe bzw. zweite Rastscheibe und/oder zweite Zahnradscheibe in einem verriegelten Zustand vorliegen.

Die erfindungsgemäßen Schwenklager werden bei Fahrgestellen bevorzugt in der Weise eingesetzt, dass die Vorderradstrebe starr an dem Schwenklagergehäuse angebracht ist, während die Schiebergriffstrebe und die Hinterradstrebe gegeneinander verdrehbar, insbesondere in Richtung auf die Vorderradstützstrebe verdrehbar ausgebildet sind.

Von besonderem Vorteil bei dem erfindungsgemäßen Schwenklager ist auch, dass der Auslöser und die erste Zahnradscheibe separat über die erste bzw. zweite Betätigungsvorrichtung aktiviert werden können, beispielsweise über mit diesen verbundene Seil- oder Bowdenzüge. Soll zum Beispiel nur der Schiebergriff aus der üblichen Schiebeposition über dem Hinterrad in eine Position verschwenkt werden, in der sich der Schiebergriff im Wesentlichen über dem Vorderrad befindet, kann dieses durch Betätigen des Auslösers bewerkstelligt werden. Hierdurch wird die erste Rastscheibe von der ersten Zahnradscheibe entkoppelt, wodurch sich der Schiebergriff von einer ersten Rastposition in eine weitere Rastposition verschwenken lässt. Nach Vervollständigung dieses Schwenkvorgangs befindet sich der Auslöser wieder in seiner ursprünglichen Position. Dieses kann dadurch bewerkstelligt werden, dass die erste Druckfeder die erste Rastscheibe wieder in eine entsprechende Einrastposition in der ersten Zahnradscheibe hineindrückt. Dieser Vorgang kann unterstützt werden durch ein elastisches Mittel, das den Auslöser über ein drittes Betätigungsmittel mit der zweiten Gehäusehälftenabdeckung verbindet. Aus dieser nach vorne geklappten Position des Schiebergriffs kann nun das erfindungsgemäße Schwenklager dazu genutzt werden, den Schiebergriff, die Vorderradstützstrebe und die Hinterradstützstrebe vollständig zusammenzuklappen. Dieses gelingt mit dem erfindungsgemäßen Schwenklager bereits dadurch, dass die erste Betätigungsvorrichtung der ersten Auslöserzahnradscheibe derart ausgestaltet ist, dass sie über einen Mitnehmer verfügt, der bei Betätigung der ersten Betätigungsvorrichtung, beispielsweise über einen Seil- oder Bowdenzug, die zweite Betätigungsvorrichtung des Auslösers mitnimmt. Mit anderen Worten, wird die erste Auslöserzahnradscheibe, z.B. über einen Seilzug, der an der ersten Betätigungsvorrichtung angreift, in Rotation versetzt, wird bereits auf diese Weise durch die an den Mitnehmer anliegende zweite Betätigungsvorrichtung der Auslöser ebenfalls in Rotationsbewegung versetzt. Während durch die Rotation der ersten Auslöserzahnradscheibe letztendlich die zweite Rastscheibe von der zweiten Zahnradscheibe entkoppelt wird, wodurch die Hinterradstützstrebe drehbar wird, wird durch die gleichzeitige (Mit-)Betätigung des Auslösers die erste Rastscheibe von der ersten Zahnradscheibe entriegelt bzw. entkoppelt, wodurch der Schiebergriff ebenfalls in Richtung auf die Vorderradstützstrebe verschwenkt werden kann.

Das erfindungsgemäße Schwenklager ist in einer Weiterentwicklung gekennzeichnet durch eine erste Haltevorrichtung für ein Sitzelement, enthaltend eine Sitzfläche, oder für eine Arretierung für ein Sitzelement, umfassend einen Befestigungsbügel für die Anbringung der Sitzfläche und eine Lenker- bzw. Justierleiste mit einem ersten und einem gegenüberliegenden zweiten Ende, wobei die erste Haltevorrichtung drehbar um einen ersten Befestigungspunkt an der Außenseite der ersten Gehäusehälftenabdeckung befestigt und gelagert ist und wobei die Lenker- bzw. Justierleiste drehbar am ersten Ende um einen zweiten Befestigungspunkt an dem dritten Aufnahmeteil und/oder der dritten Strebe befestigt und gelagert ist und wobei das zweite Ende der Lenker- bzw. Justierleiste drehbar um einen dritten Befestigungspunkt an der ersten Haltevorrichtung befestigt und gelagert ist, wobei die erste Haltevorrichtung und die Lenker- bzw. Justierleiste sowie der erste, zweite und dritte Befestigungspunkt derart eingerichtet und aufeinander abgestimmt sind, dass beim Aufeinanderzubewegen von erstem und drittem Aufnahmeteil bzw. von erster und dritter Strebe der Befestigungsbügel der ersten Haltevorrichtung derart reversibel bewegbar ist, dass ein an dem Befestigungsbügel befestigte bzw. befestigbares Sitzelement im zusammengeklappten Zustand des Schwenklagers eine Orientierung einnimmt, in der dessen Sitzfläche im Wesentlichen gleichgerichtet mit dem ersten und/oder dritten Aufnahmeteil bzw. mit der ersten und/oder dritten Strebe, insbesondere mit der Vorder- und/oder Hinterradstrebe, vorliegt.

In einer bevorzugten Ausgestaltung kann dabei vorgesehen sein, dass, insbesondere bei gattungsgemäßem Gebrauch des erfindungsgemäßen Schwenklagers, der dritte Befestigungspunkt stets auf der Seite einer durch den ersten und zweiten Befestigungspunkt gebildeten Linie liegt, die einer Linie, die die erste und zweite Achse verbindet, zugewandt ist. Bei gattungsgemäßem Gebrauch befindet sich dabei der dritte Befestigungspunkt regelmäßig oberhalb einer durch den ersten und zweiten Befestigungspunkt gebildeten Linie.

Ferner hat es sich als besonders zweckmäßig erwiesen, wenn der erste Befestigungspunkt an dem ersten Teilabschnitt vorliegt und/oder dass der erste Befestigungspunkt bei gattungsgemäßem Gebrauch des Schwenklagers stets weniger weit beabstandet ist von einer Linie, die die erste und zweite Achse verbindet, als der zweite Befestigungspunkt. Bei gattungsgemäßen Gebrauch befindet sich dabei der erste Befestigungspunkt regelmäßig oberhalb des zweiten Befestigungspunktes. Die der Erfindung zugrunde liegende Aufgabe wird des weiteren gelöst durch ein Fahrgestell, insbesondere Kinderwagengestell, umfassend zwei zur Längsachse des Fahr- bzw. Kinderwagengestells spiegelbildlich angeordnete, von vorne nach hinten ansteigend verlaufende vordere Stützstreben, an deren unteren Enden, gegebenenfalls mit zwischengeschalteten, Haltern und/oder Lagern und/oder Achsen, Vorderräder anbringbar sind oder vorliegen oder die mit einem verbindenden Brückenelement ausgestattet sind, an das, insbesondere mittig, mindestens ein Vorderrad angebracht oder anbringbar ist; zwei zur Längsachse des Fahr- bzw. Kinderwagengestells spiegelbildlich angeordnete, insbesondere von hinten nach vorne verlaufende, hintere Stützstreben, an deren unteren Enden, gegebenenfalls mit zwischengeschalteten Haltern und/oder Lagern und/oder Achsen, Hinterräder anbringbar sind oder vorliegen; zwei Schiebestangen, an deren oberen Enden einzelne Schiebegriffe oder ein verbindender Schiebebügel angebracht oder anbringbar sind; ein erstes erfindungsgemäßes Schwenklager und ein zweites erfindungsgemäßes Schwenklager, wobei die vorderen Stützstreben erste Streben darstellen und jeweils in den ersten Aufnahmeteilen von erstem und zweitem Schwenklager vorliegen, wobei die Schieberstangen zweite Streben darstellen und jeweils in den zweiten Aufnahmeteilen von erstem und zweitem Schwenklager vorliegen, und wobei die hinteren Stützstreben dritte Streben darstellen und jeweils in den dritten Aufnahmeteilen von erstem und zweitem Schwenklager vorliegen, wobei die Schiebestangen über die Schwenklager jeweils nach vorne in Richtung der vorderen Stützstreben verschwenkbar sind, wobei die hintere Stützstrebe über die Schwenklager jeweils nach vorne in
eine Verstauposition verschwenkbar sind und wobei die Schwenklager derart ausgebildet sind, dass beim Vorschwenken der Schiebestangen in Richtung der vorderen Stützstrebe durch Drehbewegungstransformation die hintere Stützstrebe automatisch nach vorne verschwenkbar ist.

Fahrgestelle im Sinne der vorliegenden Erfindung umfassen neben Kinderwagen unter anderem auch Puppenwagen, Rollatoren, Tablettwagen, Werkzeugkistenträger, Rollstühle, sowie Fahrgestelle für die Essensausgabe, z.B. in Krankenhäusern oder Kindertagesstätten, oder für die Medikamentenausgabe, z.B. in Krankenhäusern oder Altenheimen, und dergleichen. Daneben ist es auch möglich, das erfindungsgemäße Schwenklager für z.B. Klappstühle, Klappsessel, Klapptische und dergleichen einzusetzen.

Mit der vorliegenden Erfindung eines weiterentwickelten Schwenklagers wurde überraschend gefunden, dass sich Fahrgestelle, insbesondere Kinderwagengestelle, auf einfache und zuverlässige Weise zusammenklappen und wieder entfalten lassen, und zwar auf eine besonders platzsparende Weise. Mit den erfindungsgemäßen Schwenklagern ist es möglich, die Stützstreben für Vorder- und Hinterräder sowie die Schiebergriffstangen soweit zusammenzuklappen, dass sie sämtlich parallel zueinander angeordnet sind. Uberdies gestatten es die erfindungsgemäßen Schwenklager, Fahrgestelle, insbesondere Kinderwagengestelle derart zusammenzuklappen, dass sie auf ihrer zusammengeklappten Schmalseite gelagert werden können, ohne Gefahr zu laufen umzukippen.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind.

Dabei zeigen:
- Figur 1: eine schematische perspektivische Explosionsdarstellung des erfindungsgemäßen Schwenklagers,
- Figur 2: eine perspektivische Draufsicht auf die Innenseite der zweiten Gehäusehälftenabdeckung des erfindungsgemäßen Schwenklagers gemäß Figur 1,
- Figur 3: eine perspektivische Draufsicht auf das erfindungsgemäße Schwenklager gemäß Figur 1 ohne die zweite Gehäusehälftenabdeckung,
- Figur 4: einen Ausschnitt eines erfindungsgemäßen Kinderwagengestells,
- Figur 5: ein erfindungsgemäßes Kinderwagengestell,
- Figur 6: das Kinderwagengestell gemäß Figur 5 mit vornüber geklapptem Schiebergriff,
- Figur 7: das erfindungsgemäße Kinderwagengestell gemäß Figur 5 im zusammengefalteten Zustand,
- Figur 8: das erfindungsgemäße Kinderwagengestell gemäß Figur 5 im zusammengefalteten Zustand,
- Figur 9: das erfindungsgemäße Kinderwagengestellt gemäß Figur 5 im zusammengefalteten Zustand,
- Figur 10: eine Schnittansicht durch einen Abschnitt des erfindungsgemäßen Schwenklagers,
- Figur 11: einen schematische Draufsicht auf die zweite Gehäusehälftenabdeckung des erfindungsgemäßen Schwenklagers,
- Figur 12: eine schematische Querschnittsansicht durch einen Ausschnitt von erster Rastscheibe und erster Zahnradscheibe und
- Figur 13: eine schematische Querschnittsansicht durch einen Ausschnitt von erster Rastscheibe und erster Zahnradscheibe im entkoppelten Zustand.

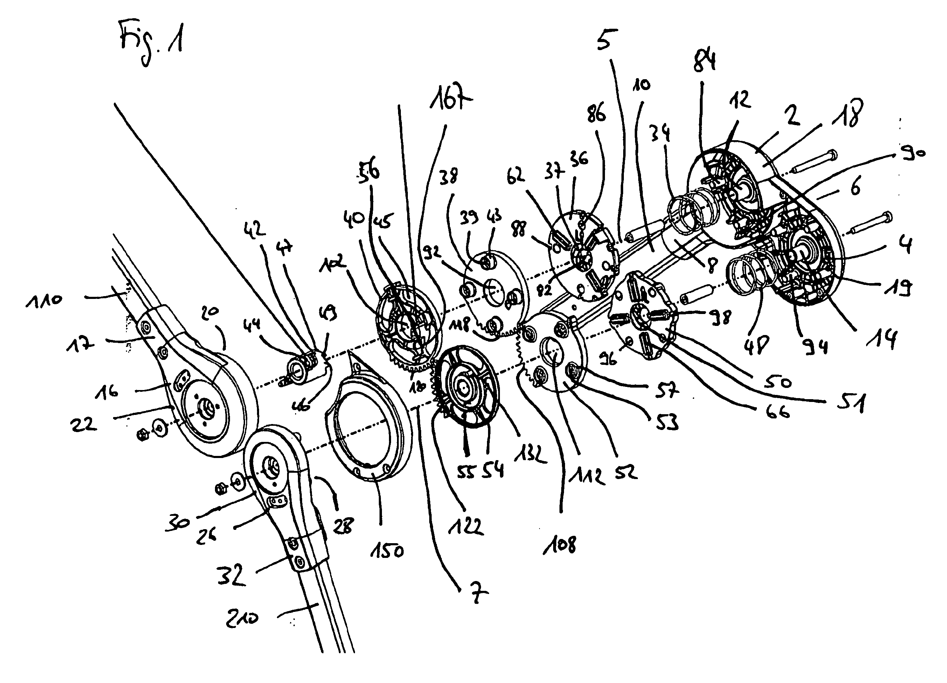

Figur 1 zeigt eine schematische Explosionsdarstellung des erfindungsgemäßen Schwenklagers. Zur besseren Veranschaulichung sind die erste und die zweite Achse nicht mit eingezeichnet worden. Das erfindungsgemäße Schwenklager 1 verfügt über eine erste Gehäusehälftenabdeckung 2, vorzugsweise aus einem Metall, besonders bevorzugt aus einem Leichtmetall wie Magnesium oder Aluminium. Diese erste Gehäusehälftenabdeckung 2 liefert zusammen mit der zweiten Gehäusehälftenabdeckung 16 und der dritten Gehäusehälftenabdeckung 26 das Gehäuse für das erfindungsgemäße Schwenklager 1. Die erste Gehäusehälftenabdeckung 2 kann in einen ersten und einen zweiten Teilabschnitt 18 bzw. 19 aufgeteilt werden. Während die zweite Gehäusehälftenabdeckung 16 in der dargestellten Ausführungsform mit dem ersten Teilabschnitt 18 die Komponenten ummantelt, die auf der ersten Achse vorliegen, bildet die dritte Gehäusehälftenabdeckung 26 zusammen mit dem zweiten Teilabschnitt 19 der ersten Gehäusehälftenabdeckung 2 ein Teilgehäuse, das die Komponenten der zweiten Achse umschließt und vorzugsweise vor Außeneinflüssen schützt. In der in Figur 1 wiedergegebenen Ausführungsform eines erfindungsgemäßen Schwenklagers 1 ist ein erstes Aufnahmeteil 8 integraler Bestandteil des ersten Teilabschnitts 18 der Gehäusehälftenabdeckung 2. Dieses erste Aufnahmeteil 8 ist in Form einer Hülse bzw. eines Stutzens ausgebildet und geeignet für die Aufnahme der vorderen Stützstrebe eines Fahrgestells, beispielsweise eines Kinderwagengestells.

In der dargestellten Ausführungsform verfügen auch die zweiten und dritten Gehäusehälftenabdeckungen 16 bzw. 26 über ein zweites bzw. drittes Aufnahmeteil 17, 32. Bei dem erfindungsgemäßen Schwenklager 1 gemäß Figur 1 nimmt das zweite Aufnahmeteil 17 eine Schieberstange eines Fahrgestells, insbesondere eines Kinderwagengestells, und das dritte Aufnahmeteil 32 die hintere Stützstrebe eines solchen Gestells auf. Hierbei sind in der dargestellten Variante das zweite Aufnahmeteil 17 und das dritte Aufnahmeteil 32 jeweils integraler Bestandteil der zweiten bzw. dritten Gehäusehälftenabdeckung 16, 26. Abschnittsweise dargestellt sind ebenfalls die in das erste Aufnahmeteil 8 eingelassene vordere Stützstrebe 10, die in das zweite Aufnahmeteil 17 eingelassene Schieberstange 110 und die in das dritte Aufnahmeteil 32 eingelassenen hintere Stützstrebe 210.

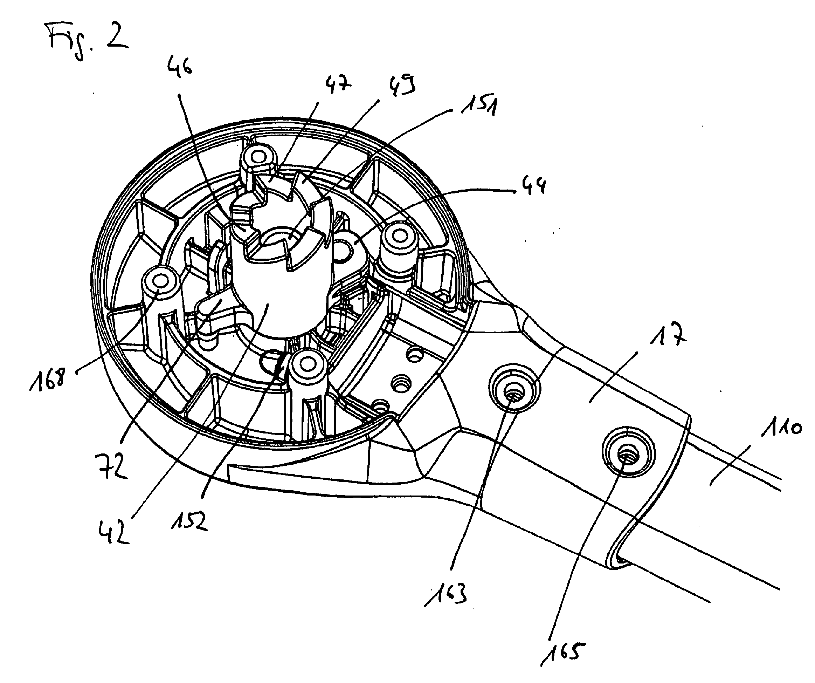

Des weiteren ist die erste Gehäusehälftenabdeckung 2 auf ihrer Innenseite 4 mit ersten und zweiten Einrichtungen 12 bzw. 14 ausgestattet, die zur Ausbildung der ersten bzw. zweiten Achse dienen. Hierbei liegt die erste Einrichtung 12 in Form einer Hülse auf der Innenseite des ersten Teilabschnitts 18 vor. Die zweite Einrichtung 14 liegt auf der Innenseite des zweiten Teilabschnitts 19 vor und ist in der dargestellten Ausführungsform ebenfalls in Form einer Hülse ausgebildet. In der abgebildeten Ausgestaltung eines erfindungsgemäßen Schwenklagers 1 sind diese Hülsen integraler Bestandteil der Gehäusehälftenabdeckung 2. Die Innenseiten der zweiten und der dritten Gehäusehälftenabdeckung sind vorzugsweise mit entsprechenden Einrichtungen zur Ausbildung der ersten bzw. zweiten Achse ausgestattet und können ebenfalls in Form gleichgerichteter Hülsen vorliegen (siehe Figur 2, Bezugszeichen 151).

Demzufolge bilden erste und dritte Einrichtung 12 und 151 Aufnahmen für die erste Achse bzw. sind Bestandteil der ersten Achse. In gleicher Weise sind zweite und vierte Einrichtung ausgelegt, um die zweite Achse aufzunehmen bzw. einen Bestandteil dieser zweiten Achse zu bilden.

Auf der ersten Achse liegt eine erste Druckfeder 34 vor, die eine Anlage- bzw. Anschlagsfläche auf der Innenseite 4 des ersten Teilabschnitts 18 der ersten Gehäusehälftenabdeckung 2 hat. Das gegenüberliegende Ende dieser Druckfeder 34 liegt an der ersten Rastscheibe 36 an. Die erste Druckfeder 34 presst die erste Rastscheibe 36 gegen die erste Zahnradscheibe 38. Auf der der ersten Rastscheibe 36 zugewandten Seite der ersten Zahnradscheibe 38 liegen erste Einkerbungen (nicht abgebildet) vor, die zu den ersten Ausbuchtungen 62 auf derjenigen Seite der ersten Rastscheibe 36, die von der Innenseite 4 der ersten Gehäusehälftenabdeckung 2 abgewandt ist, in Eingriff bringbar sind. In anderen Worten, über die Druckfeder 34 sind die erste Rastscheibe 36 und die erste Zahnradscheibe 38 miteinander gekoppelt, wenn die Ausbuchtungen 62 in den dazu korrespondierenden Einkerbungen eingerastet vorliegen. Um das erste Lager bzw. Aufnahmeloch 82 der ersten Rastscheibe 36 herum ist eine erste Entkopplungsvorrichtung 37 vorgesehen, beispielsweise wie in Figur 1 gezeigt, in Form aufeinanderfolgender, abgeschrägter Auflageflächen bzw. Zähne. Die erste Entkopplungsvorrichtung 37 ist der ersten Zahnradscheibe 38 zugewandt. Diese erste Entkopplungsvorrichtung 37 wechselwirkt mit dem Auslöser 42, der auf seiner der ersten Rastscheibe 36 zugewandten Seite über eine erste Entriegelungsvorrichtung 46 verfügt. Diese Entriegelungsvorrichtung 46 umfasst einen Kranz abgeschrägter Auflageflächen, die komplementär sind zu den abgeschrägten Auflageflächen der ersten Entkopplungsvorrichtung 37 und die mit letzteren in Wechselwirkung treten. Durch Drehung des Auslösers 42 auf der ersten Achse gleiten die abgeschrägten Auflageflächen von der ersten Entriegelungsvorrichtung 46 und erster

Entkopplungsvorrichtung 37 übereinander und führen, da der Auslöser 42 in Richtung der zweiten Gehäusehälftenabdeckung 16 auf der ersten Achse axial invariant ist, zu einer zunehmenden Vergrößerung des Abstands der ersten Rastscheibe 36 von der ersten Zahnradscheibe 38. Die Größe der Auflageflächen 62 bzw. deren Steigung ist derart zu bemessen, dass der zwischen der ersten Rastscheibe 36 und der ersten Zahnradscheibe 38 erzeugbare Abstand ausreicht, um die Ausbuchtungen 62 aus den dazu korrespondierenden Einkerbungen in der ersten Zahnradscheibe 38 herauszuholen. Auf diese Weise können sodann erste Rastscheibe 36 und erste Zahnradscheibe 38 relativ gegeneinander verdreht werden. Sobald sich die Ausbuchtungen 62 sich nicht mehr in Eingriff mit den dazu korrespondierenden Einkerbungen der ersten Zahnradscheibe, 38 befinden, sind die vordere und hintere Stützstrebe gegeneinander verdrehbar.

Die erste Rastscheibe 36 liegt auf der ersten Achse verdrehsicher vor. Dieses kann dadurch gelingen, dass, wie in Figur 1 gezeigt, auf der Innenseite 4 der ersten Gehäusehälftenabdeckung 2 mehrere erste Stutzen 84 vorliegen, die in hierzu korrespondierende erste Öffnungen bzw. Löcher 86 in der ersten Rastscheibe 36 eingreifen. Zur weitergehenden Stabilisierung hat es sich als vorteilhaft erwiesen, auf dem Umfangsrand der ersten Rastscheibe 36 mindestens zwei, insbesondere mehr als zwei, beispielsweise 12 bis 15 erste Einkerbungen 88 vorzusehen, die in hierzu korrespondierende erste Raststifte 90 der ersten Gehäusehälftenabdeckung 2 eingreifen.

Der Auslöser 42 wird betätigt über einen an der zweiten Betätigungs- bzw. Befestigungsvorrichtung 44 befestigten Seil- bzw. Bowdenzug. Dieser Bowdenzug wird vorzugsweise durch das Innere der Schieberstangenstrebe 110 bis zu einer Betätigungsvorrichtung am bzw. benachbart zum Schiebergriff geführt. Auf diese Weise kann die zum Beispiel einen Kinderwagen schiebende Person, ohne den Schiebergriff loslassen zu müssen, über den Auslöser 42 die erste Rastscheibe 36 und die erste Zahnradscheibe 38 entkoppeln, wodurch die Schieberstange 110 relativ zu der vorderen und hinteren Stützstrebe 10 und 210 verschwenkbar ist, bis die Ausbuchtungsstege 62 in die nächstfolgenden Einlässe in der ersten Zahnradscheibe 38 einrasten.

Die erste Zahnradscheibe 38 ist fest mit der Innenseite der zweiten Gehäusehälftenabdeckung 16 verbunden. Dieses geschieht über die erste Anbindungsstellen 39. Hierbei kann es sich, wie in Figur 1 dargestellt, um beabstandet voneinander in der Zahnradscheibe 38 angebrachte Löcher handeln, durch die Schrauben oder ähnliche Befestigungsmittel führbar sind. Auf diese Weise gelingt eine relativ zu der zweiten Gehäusehälftenabdeckung 16 unverdrehbare Anbringung, wobei die ersten Anbindungsstellen 39 ferner über erste Abstandshalter 35, beispielsweise in Form zylinderförmiger Aufsätze verfügen, so dass die erste Zahnradscheibe 38 nicht unmittelbar mit der Innenseite der zweiten Gehäusehälftenabdeckung 16 oder der ersten Auslöserzahnradscheibe 40 zur Anlage gelangt, sondern zwischen der Innenseite der zweiten Gehäusehälftenabdeckung 16 und der ersten Zahnradscheibe 38 die erste Auslöserzahnradscheibe 40 auf der ersten Achse anordbar sowie drehbar gelagert werden kann. Diese Auslöserzahnradscheibe 40 verfügt auf ihrem Umfang über einen ersten partiellen Zahnkranz, d.h. ein erstes Zahnkranzsegment 120 umfassend eine Vielzahl benachbarter Zahnradzähne. Dieses erste Zahnkranzsegment 120erstreckt sich in der dargestellten Ausführungsform entlang eines Mittelpunktwinkels von etwa 42°. Wie die erste Zahnradscheibe 38 verfügt auch die erste Auslöserzahnradscheibe 40 über ein drittes Lager- bzw. Aufnahmeloch 102. Wie das zweite Lager- bzw. Aufnahmeloch 92 der ersten Zahnradscheibe 38 ist auch das dritte Aufnahmeloch 102 der ersten Auslöserzahnradscheibe 40 konzentrisch ausgebildet und in einer Größe ausgeformt, dass der Auslöser 42 durch diese hindurchtreten kann, um mit der ersten Entkopplungsvorrichtung 37 in Wechselwirkung zu treten. Die erste Auslöserzahnradscheibe 40 ist über den Auslöser 42 drehbar auf der ersten Achse gelagert. Damit eine partielle Drehung der ersten Auslöserzahnradscheibe 40 überhaupt stattfinden kann und nicht durch die an der Innenseite der zweiten Gehäusehälftenabdeckung 16 befestigte erste Zahnradscheibe 38 behindert wird, sind benachbart zum Umfang der ersten Auslöserzahnradscheibe 40 erste Durchstöße 45 vorgesehen, durch die die ersten Abstandshalter 35 der ersten Anbindungsstellen 39 hindurchragen. Der durch die Durchstöße 45 ermöglichte Laufweg bzw. Drehwinkel der ersten Auslöserzahnradscheibe 40 ist derart auf das auf dem Umfang desselben vorliegende erste Zahnradsegment 120 abgestimmt, dass bei Betätigung der ersten Auslöserzahnradscheibe 40 die Zähne dieses Zahnkranzsegments 120 in Eingriff bringbar sind mit dem zweiten Zahnradsegment 122 der zweiten Auslöserzahnradascheibe 54, die auf der zweiten Achse vorliegt. Die erste Auslöserzahnradscheibe 40 wird über einen Seil- bzw. Bowdenzug betätigt, welcher über eine erste Betätigungs- bzw. Befestigungsvorrichtung 56 mit der Auslöserzahnradscheibe 40 verbunden ist. Dieser Seil- bzw.

Bowdenzug wird vorzugsweise wiederum durch das Innere der Schieberstangenstrebe 110 in Richtung auf den Schiebergriff (nicht abgebildet) geführt. Durch Betätigung dieses Seil- bzw. Bowdenzugs wird die Auslöserzahnradscheibe 40 gedreht, wobei das erste Zahnradsegment 120 mit dem zweiten Zahnradsegment 122 der zweiten Auslöserzahnradscheibe 54 in Eingriff gebracht wird. Das heißt durch die Drehung der ersten Auslöserzahnradscheibe 40 wird die zweite Auslöserzahnradscheibe 56, die auf der zweiten Achse vorliegt, ebenfalls in Drehung versetzt. Hierbei sind die ersten und zweiten Zahnradsegmente 120, 122 derart relativ zueinander angeordnet, dass ein Eingriff gelingt, wenn die Schieberstange, wie in Figur 1 gezeigt, nach vorne, d.h. in Richtung auf die Vorderräder geschwenkt vorliegt. Auf der der Innenseite der ersten Gehäusehälftenabdeckung 2 zugewandten Seite der zweiten Auslöserzahnradscheibe 56 liegt eine zweite Entriegelungsvorrichtung 132 vor, welche durch das fünfte Lager bzw. Aufnahmeloch 112 der zweiten Zahnradscheibe 52 hindurchragt, um mit der zweiten Entkopplungsvorrichtung 51 der zweiten Rastscheibe 50 derart in Wechselwirkung zu treten, dass die zweiten Ausbuchtungsstege 66 auf der zweiten Rastscheibe 50 aus den hierzu komplementären Einkerbungen bzw. Einlässe auf der gegenüberliegenden Seite der zweiten Zahnradscheibe 52 hinaustreten. Auf diese Weise wird die zweite Rastscheibe 50 von der zweiten Zahnradscheibe 52 entkoppelt und die hintere Stützstrebe 210 kann durch weiteres Verschwenken der Schiebergriffstrebe 110 in Richtung auf die vordere Stützstrebe 10 ebenfalls auf diese vordere Stützstrebe 10 verschwenkt werden. Dieses geschieht dadurch, dass das dritte Zahnradsegment 118 der ersten Zahnradscheibe 38 durch Verschwenken der Schieberstange 110 in Eingriff gebracht wird mit dem vierten Zahnradsegment 108 der zweiten Zahnradscheibe 52. Während die erste Zahnradscheibe 38 fest mit der zweiten Gehäusehälftenabdeckung 16 verbunden ist, liegt die zweite Zahnradscheibe 52 in gleicher Weise fest verbunden mit der dritten Gehäusehälftenabdeckung 26 vor. Wie bei der ersten Zahnradscheibe gelingt dieses auch bei der zweiten Zahnradscheibe 52 über zweite Anbindüngsstellen 53, beispielsweise in Form von Löchern für Schrauben bzw. ähnliche Anbindungsmittel in der zweiten Zahnradscheibe 52 und zweiten Abstandshaltem 57, vorzugsweise im Bereich dieser zweiten Anbindungsstellen auf derjenigen Seite der Zahnradscheibe 52, die der Innenseite der dritten Gehäusehälftenabdeckung 26 zugewandt ist. Das heißt auch die zweite Zahnradscheibe 52 liegt unverdrehbar befestigt an der zweiten Gehäusehälftenabdeckung 26 vor. Mit Hilfe der zweiten Abstandshalter 57, die an der Innenseite der zweiten Gehäusehälftenabdeckung 26 zur Anlage gelangen, gelingt es, jedenfalls eine partielle Verdrehbarkeit der zweiten Auslöserzahnradscheibe 54 auf der zweiten Achse sicherzustellen. Hierfür sind zweite Durchstöße 55 vorgesehen, die jeweils einen zweiten Abstandshalter 57 aufnehmen und einen erforderlichen Laufweg bzw. Drehwinkel der zweiten Auslöserzahnradscheibe 54 sicherstellen.

Wie die erste Rastscheibe 36 ist auch die zweite Rastscheibe 50 verdrehsicher mit der ersten Gehäusehälftenabdeckung 2 verankert. Dieses geschieht über zylinderförmige Fortsätze 94 der ersten Gehäusehälftenabdeckung 2, die durch hierzu korrespondierende zweite Einlässe oder Löcher 96 in der zweiten Rastscheibe 50 hindurchragen. Eine besondere Stabilität kann wiederum dadurch erzeugt werden, dass zweite Einkerbungen 98 auf dem Umfang der zweiten Rastscheibe 50 mit hierzu korrespondierenden Vorsprüngen im zweiten Teilabschnitt 19 der ersten Gehäusehälftenabdeckung 2 wechselwirken. Bei dieser Art der Anbringung verbleibt die zweite Rastscheibe 50 entlang der zweiten Achse axial verschiebbar gelagert. Durch den Einsatz einer zweiten Druckfeder 48 wird die zweite Rastscheibe 50 gegen die zweite Zahnradscheibe 52 gepresst. Liegen die Ausbuchtungsstege 66 der zweiten Rastscheibe 50 in den hierzu korrespondierenden Einkerbungen bzw. Einlässe der zweiten Zahnradscheibe 52 vor, d.h. sind zweite Rastscheibe 50 und zweite Zahnradscheibe 52 nicht entkoppelt, ist die hintere Stützstrebe 210 fest in ihrer jeweiligen Position arretiert.

Zweckmäßigerweise wird das Gehäuse des erfindungsgemäßen Schwenklagers 1 komplettiert durch einen Abdeckungsring 150, welcher die dritte Gehäusehälftenabdeckung 26, soweit erforderlich, ergänzt und zu einer umfassenden Abdeckung der auf der zweiten Achse vorliegenden Komponenten führt. Das heißt, während der erste Teilabschnitt 18 der ersten Gehäusehälftenabdeckung 2 zusammen mit der zweiten Gehäusehälftenabdeckung 16 die auf der ersten Achse vorliegenden Komponenten hinreichend umschließt, gelingt dieses bei der dargestellten Ausführungsform für die auf der zweiten Achse vorliegenden Komponenten bevorzugt erst durch Hinzuziehung des Abdeckungsrings 150, welcher mit dem zweiten Teilabschnitt 19 der ersten Gehäusehälftenabdeckung 2 wechselwirkt.

Während der erste Auslöser 42 dazu dient, die Schiebergriffstange 110 aus ihrer arretierten Position zu lösen und verschiebbar zu gestalten, gelingt mit dem ersten und dem zweiten Auslöserzahnrad 40, 54 die Arretierung der hinteren Stützstrebe 210 zu lösen, wodurch diese sich durch Betätigung der Schiebergriffstange 110 wie diese in Richtung auf die vordere Stützstrebe 10 verschwenken lässt.

Wie z.B. der Figur 1 entnommen werden kann, gelingt ein Zusammenklappen von Schieberstrebe 110 und Hinterradstützstrebe 210 in Richtung der Vorderradstützstrebe 10 dann, wenn sowohl die Rastscheibe 36 und die erste Zahnradscheibe 38 als auch die zweite Rastscheibe 50 mit der zweiten Zahnradscheibe 52 entriegelt bzw. entkoppelt vorliegen.

Figur 2 zeigt eine perspektivische Draufsicht auf die Innenseite der zweiten Gehäusehälftenabdeckung 16. In dem zweiten Aufnahmeteil 17 liegt die Stützstrebe 110 vor. Diese Strebe zweite 110 kann durch Nieten oder Schrauben mit dem Aufnahmeteil 17 verbunden sein. In der Figur 2 sind die hierfür vorgesehenen Löcher 162 und 164 gezeigt. Auf der dritten Einrichtung 151 zur Ausbildung der ersten Achse in Form einer Hülse, welche an der Innenseite der zweiten Gehäusehälftenabdeckung 16 vorliegt, ist der Auslöser 42 aufgesetzt. Der Auslöser 42 ist auf der Hülse 151 bzw. der ersten Achse in bestimmten Grenzen frei rotierbar. Benachbart zu der Innenseite der zweiten Gehäusehälftenabdeckung 16 liegen an dem auf der Hülse aufgesetzten Auslöser 42 eine zweite und eine dritte Betätigungs- bzw. Befestigungsvorrichtung 44 bzw. 72 vor. Die zweite Betätigungs- bzw. Befestigungsvorrichtung 44 dient zur Befestigung mit einem Seil- bzw. Bowdenzug (nicht abgebildet), der durch das Innere der Stützstrebe 110 geführt wird. Die dritte Betätigungs- bzw. Befestigungsvorrichtung 72 ist mit einer Zugfeder 116 verbindbar. Das heißt nach Lösen des Bowdenzugs trägt die Zugfeder 166 dazu bei, dass der Auslöser 42 wieder in seine Grundposition gelangt. Figur 2 zeigt ferner die erste Entriegelungsvorrichtung 46 als Bestandteil des Auslösers 42, welche sich aus einem Kranz 47 von umlaufenden, abgeschrägten Entriegelungszähnen 49 zusammensetzt. Aus der Figur 2 gehen ferner die Schraubenaufnahmelöcher 168 zur Aufnahme von Schrauben bzw. Nieten hervor, welche über die Anbindungsstellen 39 die erste Zahnradscheibe 38 an der zweiten Gehäusehälftenabdeckung 16 befestigen. Über die Steigung und Länge der abgeschrägten Entriegelungszähne 49 kann festgelegt werden, um welchen Winkel der Auslöser 42 zu drehen ist, um die erste Rastscheibe 36 von der ersten Zahnradscheibe 38 zu entkoppeln. Ist dieser Weg bekannt, kann der maximale Laufweg der dritten Betätigungsvorrichtung 72 durch einen ersten Anschlag 123 begrenzt werden. In entsprechender Weise kann der Bewegungsspielraum der zweiten Betätigungs- bzw. Befestigungsvorrichtung 44 durch einen zweiten Anschlag 174 begrenzt werden.

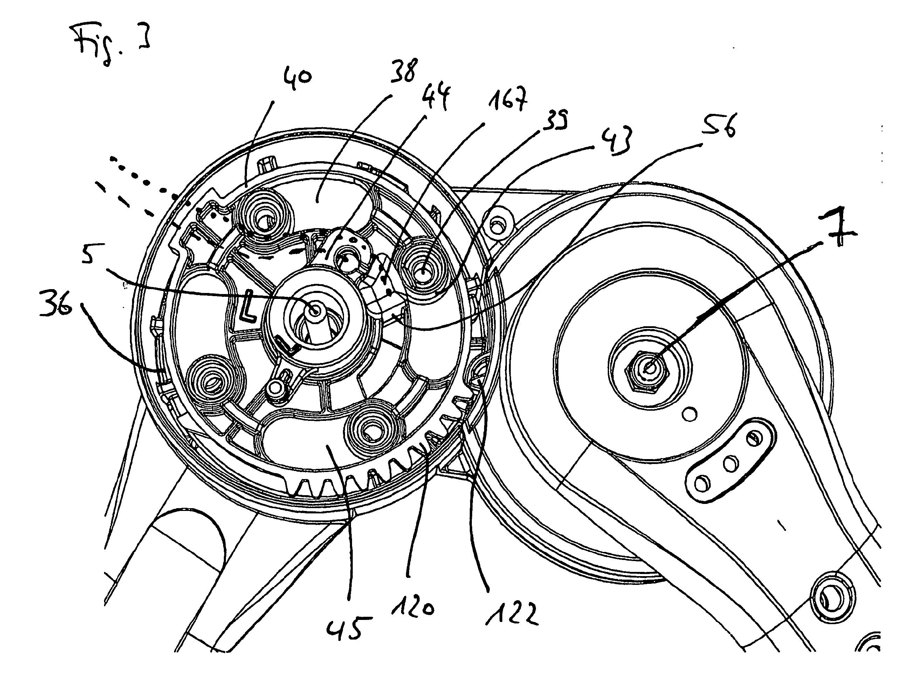

Figur 3 zeigt eine perspektivische schematische Draufsicht auf ein nahezu vollständig zusammengebautes erfindungsgemäßes Schwenklager 1, allerdings ohne die zweite Gehäusehälftenabdeckung 16. Die erste Zahnradscheibe 38 liegt auf der ersten Rastscheibe 36 auf, und die erste Auslöserzahnradscheibe 40 auf der ersten Zahnradscheibe 38. Die ersten Anbindungsstellen 39 bzw. ersten Abstandshalter 43 der ersten Zahnradscheibe 38 sind jeweils in den ersten Durchstößen 45 der ersten Auslöserzahnradscheibe 40 angeordnet. In der dargestellten Ausführungsform gestattet die Dimensionierung der ersten Durchstöße 45 eine Verdrehung der ersten Auslöserzahnradscheibe 40 relativ zu der darunter liegenden ersten Zahnradscheibe 38 um z.B. mindestens 25°. Die erste Auslöserzahnradscheibe 40 kann durch Betätigen eines Seil- bzw. Bowdenzugs, dessen Betätigungs- bzw. Befestigungsyorrichtung 56 sich auf der dem Betrachter abgewandten Seite der ersten Auslöserzahnradscheibe 40 befindet, betätigt werden. Durch diese Drehbewegung greift das auf dem Umfang befindliche erste Zahnradsegment 120 der ersten Auslöserzahnradscheibe 40 in das hierzu korrespondierende zweite Zahnradsegment 122 der zweiten Auslöserzahnradscheibe 54 ein, welches sich auf der zweiten Achse 7 befindet. Wie bereits vorangehend beschrieben, gelingt auf diese Weise die Entkopplung von zweiter Rastscheibe 50 und zweiter Zahnradscheibe 52, wodurch die Arretierung der hinteren Stützstrebe 210 gelöst und diese Stützstrebe relativ zu der vorderen Stützstrebe 10 verschwenkbar wird. Der Mitnehmer 167 sorgt dafür, dass die Betätigungs- bzw. Befestigungsvorrichtung 44 für den Seil- bzw. Bowdenzug des Auslösers 42 bei Betätigung der ersten Betätigungsvorrichtung 56 der ersten Auslöserzahnradscheibe 40 automatisch mitgenommen wird, ohne selbst betätigt werden zu müssen. In der dargestellten Ausführungsform ermöglichen die Durchstöße 45 eine Drehung der ersten Auslöserzahnradscheibe 40 um etwa 40 bis 42°. Dieses reicht bei der dargestellten Ausführungsform aus, um bei einer Drehung desselben um diesen Winkel über das erste Zahnkranzsegment 120, das mit dem zweiten Zahnradsegment 122 der zweiten Auslöserzahnradscheibe 54 wechselwirkt, letzteres wiederum um einen Winkel von 40 bis 42° in der dargestellten Ausführungsform auf dem Auslöser 42 rotieren zu lassen, wodurch durch Wechselwirkung der zweiten Entriegelungsvorrichtung 132 mit der zweiten Entkopplungsvorrichtung 51 die Ausbuchtungen 66 der zweien Rastscheibe 50 aus den korrespondierenden Einlässen 67 der zweiten Zahnradscheibe 52 heraustreten zu lassen. Auf diese Weise wird die Hinterradstrebe 210 verschwenkbar, was durch Wechselwirkung des dritten Zahnradsegments 118 der ersten Zahnradscheibe 38 mit dem vierten Zahnradsegment 108 der zweiten Zahnradscheibe 52 gelingt.

Wie Figur 3 zu entnehmen ist, liegt die zweite Betätigungsvorrichtung 44 des Auslösers 42 an dem Mitnehmer 167 der ersten Zahnradscheibe 38 an. Der Mitnehmer 167 beinhaltet hier ebenfalls die erste Betätigungsvorrichtung 56, beispielsweise für einen Seil- oder Bowdenzug (durch gepunktete Linie angedeutet). In der in Figur 3 dargestellten Ausführungsform sind Auslöser 42 wie auch erste Zahnradscheibe 40 entgegen dem Uhrzeigersinn zu drehen, um den Schiebergriff bzw. die Hinterradstützstrebe zu entkoppeln, d.h. für eine Rotation in Richtung auf die Vorderradstützstrebe freizugeben. In der in Figur 3 gezeigten Form befinden sich demgemäß sowohl der Schiebergriff wie auch die Hinterradstützstrebe in eingerasteter, d.h. fixierter Position. Wird ausschließlich der Auslöser 42 über die zweite Betätigungsvorrichtung 44 entgegen dem Uhrzeigersinn in Rotation versetzt, beispielsweise dadurch, dass man den gestrichelt dargestellten Seilzug betätigt, wechselwirken, wie zu Figur 1 und 2 erläutert, die Entriegelungszähne des Auslösers mit der ersten Entkopplungsvorrichtung und entriegeln bzw. entkoppeln die erste Rastscheibe von der zweiten Zahnradscheibe, wodurch der Schiebergriff nach vorne in Richtung auf die Vorderräder geklappt werden kann. Durch geeignete Ausrichtung der Ausbuchtung und Einlässe auf der ersten Rastscheibe und der ersten Zahnradscheibe kann der Schiebergriff in der nach vorne geklappten Form wieder arretiert werden. Um ein Fahrgestell, beispielsweise ein Kinderwagengestell mit Hilfe des erfindungsgemäßen Schwenklagers vollständig zusammenzuklappen, reicht es nun aus, allein die erste Betätigungsvorrichtung 56 der ersten Auslöserzahnradscheibe 40 zu betätigen. Wie in Figur 3 gezeigt, wird bei Betätigung der ersten Betätigungsvorrichtung 56 über den mit der Betätigungsvorrichtung 56 verbundenen Mitnehmer 167 die erste Betätigungsvorrichtung 44 des Auslösers 42 ebenfalls in Bewegung entgegen dem Uhrzeigersinn gesetzt. Während durch Betätigung der ersten Auslöserzahnradscheibe mittels der Wechselwirkung mit der zweiten Auslöserzahnradscheibe die zweite Rastscheibe von der zweiten Zahnrastscheibe entkoppelt wird, wodurch die Hinterradstützstrebe freigegeben wird, wird durch Betätigung des Auslösers durch Wechselwirkung mit der ersten Entkopplungsvorrichtung der ersten Rastscheibe die Rastscheibe von der ersten Zahnradscheibe entkoppelt, wodurch die Schiebergriffstrebe freigegeben wird. Klappt man nun den Schiebergriff bzw. die Schiebergriffstrebe in Richtung auf die Vorderradstützstrebe, greifen die Zahnräder bzw. Zahnradsegmente von erster und zweiter Zahnradscheibe ineinander, wodurch die Hinterradstützstrebe ebenfalls in Richtung auf die Vorderradstützstrebe geklappt wird. Bei der Wechselwirkung des Auslösers 42 mit der ersten Entkopplungsvorrichtung 37 wird die Entkopplung von erster Rastscheibe 36 und erster Zahnradscheibe 38 dadurch bewirkt, dass ein Entriegelungszahn bzw. die Entriegelungszähne des Auslösers auf jeweils korrespondierende abgeschrägter Auflageflächen der ersten Entkopplungseinrichtung 37 einwikrt, ohne zu der benachbarten Fläche überzuspringen. D.h. der Entriegelungszahn verfährt in dem Entkopplungsvorgang entlang der Fläche einer korrespondierenden abgeschrägten Fläche nur der ersten Entkopplungsvorrichtung 37. Entsprechendes gilt vorzugsweise auch für die Wechselwirkung der zweiten Auslöserzahnradscheibe mit der zweiten Entkopplungsvorrichtung der zweiten Rastscheibe.

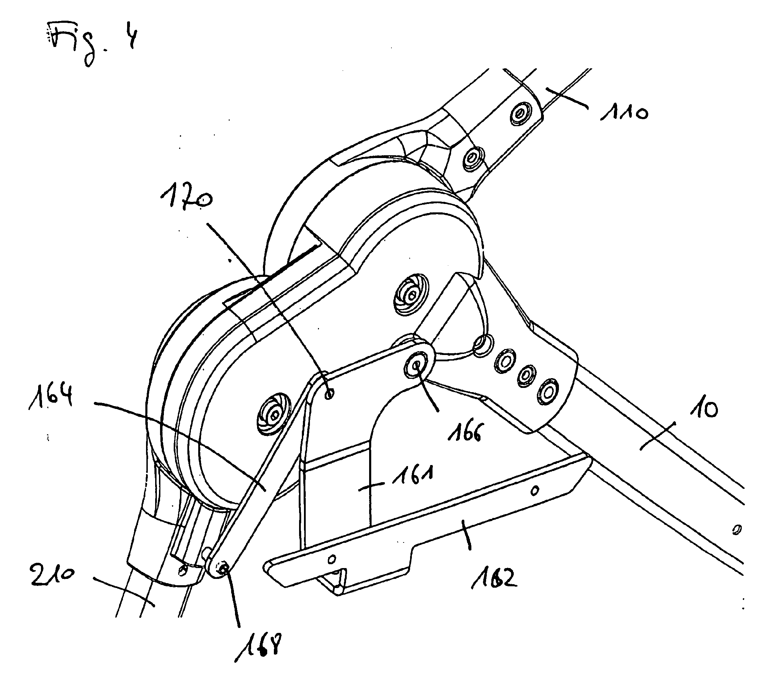

Figur 4 zeigt einen Ausschnitt aus einem Fahrgestell, insbesondere Kinderwagengestell, umfassend das erfindungsgemäße Schwenklager 1, die Schiebergriffstange 110, die vordere Stützstrebe 10 und die hintere Stützstrebe 210. An dem Gehäuse des Schwenklagers 1 ist eine erste Haltevorrichtung 161 umfassend einen Befestigungsbügel 162 für die Anbringung der Sitzfläche bzw. einer Arretierungsvorrichtung für die Sitzfläche vorgesehen. Das heißt auf der Außenseite der ersten Gehäusehälftenabdeckung 2 liegt ein erster Befestigungspunkt 166 für die erste Haltevorrichtung 161 vor. Diese Haltevorrichtung 161 ist mit dem Befestigungsbügel 162 für die Anbringung der Sitzfläche ausgestattet. Ferner ist an dem dritten Aufnahmeteil 32 für die hintere Stützstrebe 210 eine Justierleiste 164 über einen zweiten Befestigungspunkt 168 an einem ersten Ende derselben angebracht. Das gegenüberliegende Ende der Justierleise 164 ist drehbar um einen dritten Befestigungspunkt 170 an der ersten Haltevorrichtung 161 befestigt und gelagert. Die erste Haltevorrichtung 161 und die Justierleiste 164 sowie der erste, zweite und dritte Befestigungspunkt 166, 168 und 170 sind derart eingerichtet und aufeinander abgestimmt, dass beim Aufeinanderzubewegen von erster und dritter Stützstrebe 10, 210 der Befestigungsbügel 162 der ersten Haltevorrichtung 161 derart reversibel bewegbar ist, dass ein an dem Befestigungsbügel 162 gegebenenfalls über eine Arretiervorrichtung befestigtes bzw. befestigbares Sitzelement im zusammengeklappten Zustand des Schwenklagers eine Orientierung einnimmt, in der dessen Sitzfläche im Wesentlichen gleichgerichtet mit der ersten und/oder dritten Strebe, insbesondere mit der Vorder- und/oder Hinterradstrebe, vorliegt.

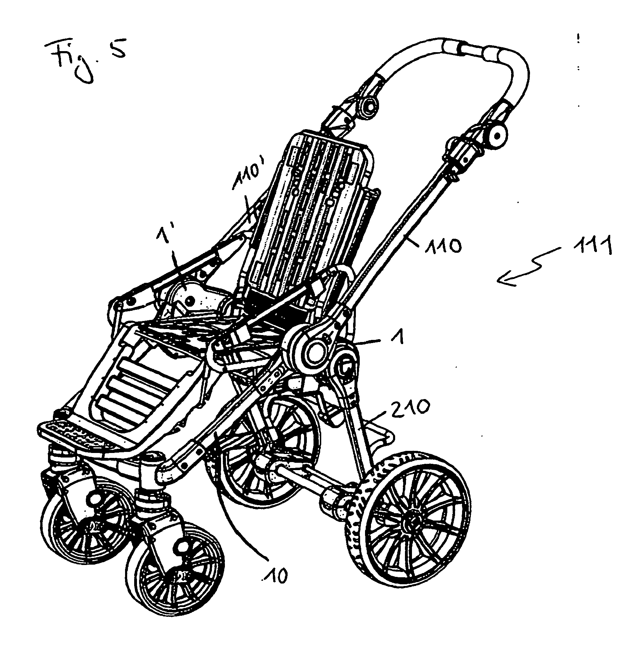

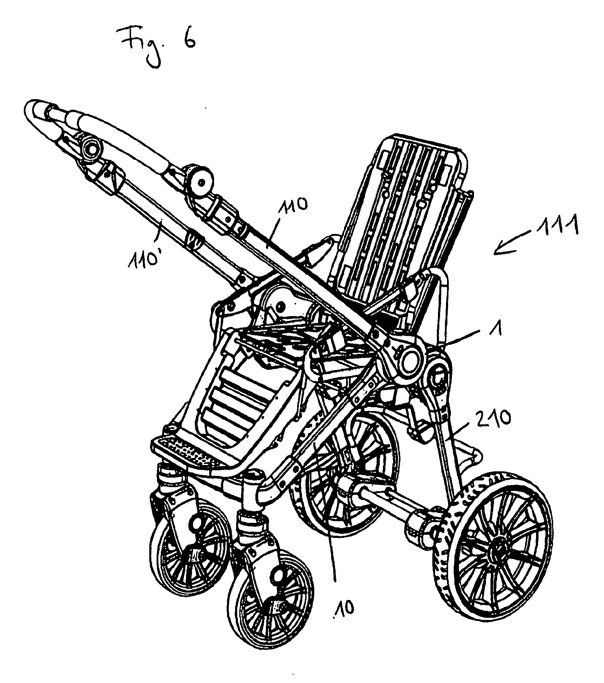

Figur 5 zeigt einen erfindungsgemäßen Kinderwagen 111, der mit zwei erfindungsgemäßen Schwenklagern 1, 1' ausgestattet ist. Der Schiebergriff und die Schieberstangen 110, 110' erstrecken sich über die Hinterräder hinaus und sind demgemäß dazu geeignet, den Kinderwagen in üblicher Weise zu bewegen. Der Sitz ist über die in Figur 4 gezeigte Haltevorrichtung jeweils mit den einander zugewandten Seiten der ersten Gehäusehälftenabdeckungen der erfindungsgemäßen Schwenklager verbunden. Durch Betätigung des ersten Seilzugs wird die erste Rastscheibe von der ersten Zahnradscheibe entkoppelt und der Schiebergriff kann in eine Arretierposition nach vorne verschwenkt werden, wie in Figur 6 gezeigt. Durch Betätigung des zweiten Seilzugs wird über die Wechselwirkung von erster und zweiter Auslöserzahnradscheibe die zweite Rastscheibe von der zweiten Zahnradscheibe entkoppelt. Durch weiteres Herunterdrücken der Schieberstangen in Richtung auf die vorderen Stützstreben können nun ebenfalls die hinteren Stützstreben auf diese vorderen Stützstreben zu bewegt werden. Denn, wie in Figuren 1 und 3 angedeutet, greifen beim weiteren Herunterdrücken der Schieberstangen das erste Zahnradsegment der ersten Zahnradscheibe in das zweite Zahnradsegment der zweiten Zahnradscheibe ineinander ein, so dass Schieberstangen und hintere Stützstreben aufeinander zu verschwenkt werden können.

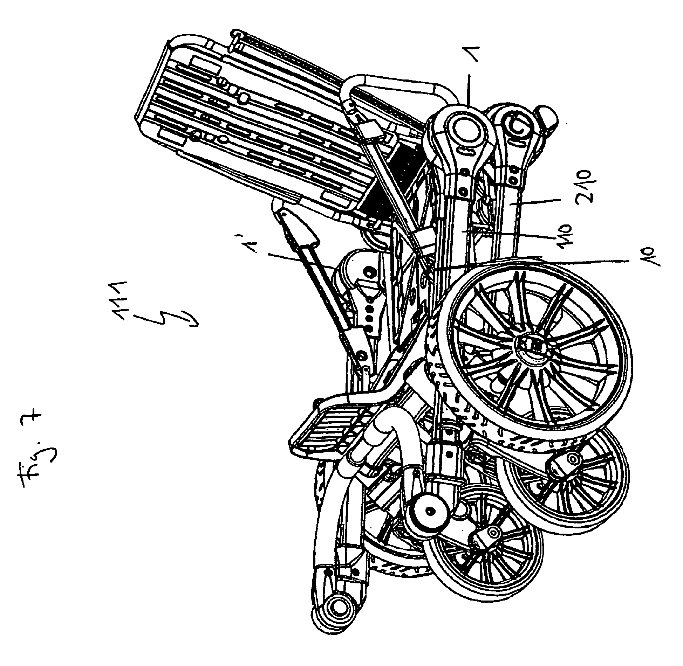

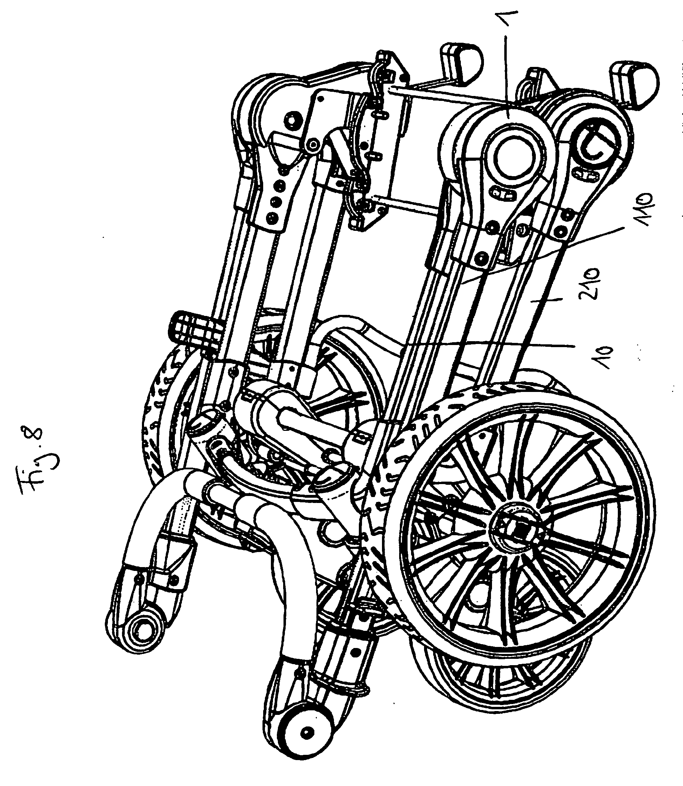

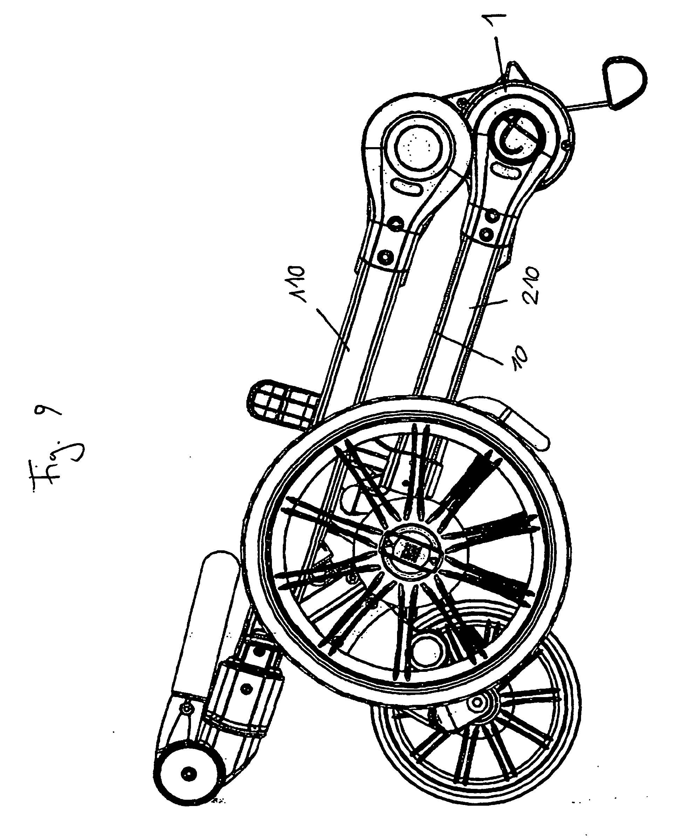

Figur 7 zeigt den durch den geschilderten Zusammenklappvorgang erhältlichen Kinderwagen. Die vorderen und hinteren Stützstreben sowie die Schieberstangen sind sämtlich im Wesentlichen parallel ausgerichtet und führen so zu einer sehr kompakten zusammengeklappten Konstruktion. Der Grad an Kompaktheit kann noch dadurch erhöht werden, dass man den Schiebergriff mit Hilfe von Gelenken umklappbar gestaltet (siehe Figur 8) und dass man zudem die Rückenlehne des Sitzes auf die Sitzfläche umklappen kann. Auf diese Weise ist es sogar möglich, den zusammengeklappten Kinderwagen bzw. das zusammengeklappte Kinderwagengestell freistehend hochkant zu lagern, wie in Figur 9 gezeigt. Eine besonders stabile zusammengeklappte Konstruktion lässt sich dadurch erhalten, dass man den zurückgeklappten Schiebergriff an der Sitzkonstruktion lösbar arretiert. Besondere Stabilität erhält der erfindungsgemäße Kinderwagen bzw. das erfindungsgemäße Kinderwagengestell auch dadurch, dass in zusammengeklapptem Zustand die jeweiligen Schieberstangen und Stützstreben durch das Ineinandergreifen von erster Rastscheibe und erster Zahnradscheibe bzw. zweiter Rastscheibe und zweiter Zahnradscheibe unverschwenkbar vorliegen. Erst durch Betätigen des Seilzuges für die erste Auslöserzahnradscheibe werden zweite Rastscheibe und zweite Zahnradscheibe wieder entkoppelt, wodurch die Schieberstangen und die hinteren Stützstreben wieder voneinander weg verschwenkt werden können, bis die zweite Rastscheibe und die zweite Zahnradscheibe in der nächstfolgenden Position wieder miteinander in Eingriff vorliegen. Sodann kann durch Betätigen des Seilzuges für den Auslöser der Schiebergriff in seinen hintere Schiebeposition verschwenkt werden. Auch in dieser Position befinden sich dann die erste Rastscheibe und die erste Zahnradscheibe wieder in Eingriff und das Kinderwagengestell kann gattungsgemäß eingesetzt werden.

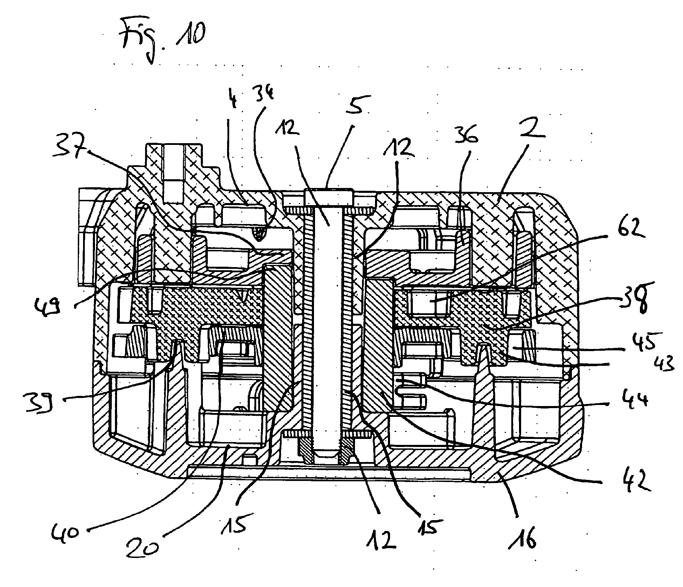

Figur 10 zeigt eine Schnittansicht durch einen Abschnitt des erfindungsgemäßen Schwenklagers 1. Die erste Achse 5 wird gebildet durch die erste Einrichtung 12 und die dritte Einrichtung 15. Die erste Einrichtung 12 umfasst dabei eine an der ersten Gehäusehälftenabdeckung 2 befestigte bzw. einstückige mit dieser verbunden vorliegende Hülse sowie eine Schraube samt Mutter oder alternativ eine Nietverbindung. Die dritte Einrichtung 15 umfasst eine Hülse, die verbunden mit der zweiten Gehäusehälftenabdeckung 16 bzw. einstückig verbunden mit dieser vorliegt sowie ein Lager, in dem die Schraube vorliegt. Benachbart zur Innenseite 4 der ersten Gehäusehälftenabdeckung 2 befindet sich die erste Rastscheibe 36. Es folgt die erste Zahnradscheibe 38 sowie die erste Auslöserzahnradscheibe 40. Der Auslöser 42 liegt benachbart zur Innenseite 20 der zweiten Gehäusehälftenabdeckung 16 vor und umschließt zu einem großen Teil die erste Achse 5. Die erste Rastscheibe 36 ist axial verschiebbar auf der ersten Achse 5 gelagert. Die erste Zahnradscheibe 38 und die erste Auslöserzahnradscheibe 40 liegen drehbar gelagert auf dem Auslöser 42 vor. Der Auslöser 42 ist wiederum drehbar auf der ersten Achse 5 gelagert. Die Entriegelungszähne 49 des Auslösers 42 greifen in die entsprechend abgeschrägten Flächen der ersten Entkopplungsvorrichtung 37 der ersten Rastscheibe ein. Durch Betätigen der zweiten Betätigungsvorrichtung 44 oder der ersten Betätigungsvorrichtung 56, beispielsweise über einen Seilzug, rotiert der Auslöser 42 um die erste Achse 5, wodurch die erste Rastscheibe 36 in Richtung auf die Innenseite 4 der ersten Gehäusehälftenabdeckung 2 gegen die erste Druckfeder 34 gedrückt wird mit der Folge, dass die ersten Ausbuchtungen 62 der ersten Rastscheibe 36 aus den korrespondierenden Einkerbungen bzw. Einlässen der ersten Zahnradscheibe 38 hinaustreten und die erste Rastscheibe 36 und erste Zahnradscheibe 38 gegeneinander verdreht werden können. Des weiteren entnimmt man der Figur 10 die ersten Durchstöße 45 in der ersten Auslöserzahnradscheibe 40, durch die die ersten Abstandshalter 43 und die erste Zahnradscheibe 38 hindurchtreten. In die ersten Anbindungsstellen 39 der ersten Zahnradscheibe 38 greifen entsprechende Befestigungsmittel ein, die mit der Innenseite 20 der zweiten Gehäusehälftenabdeckung 16 verbunden sind.

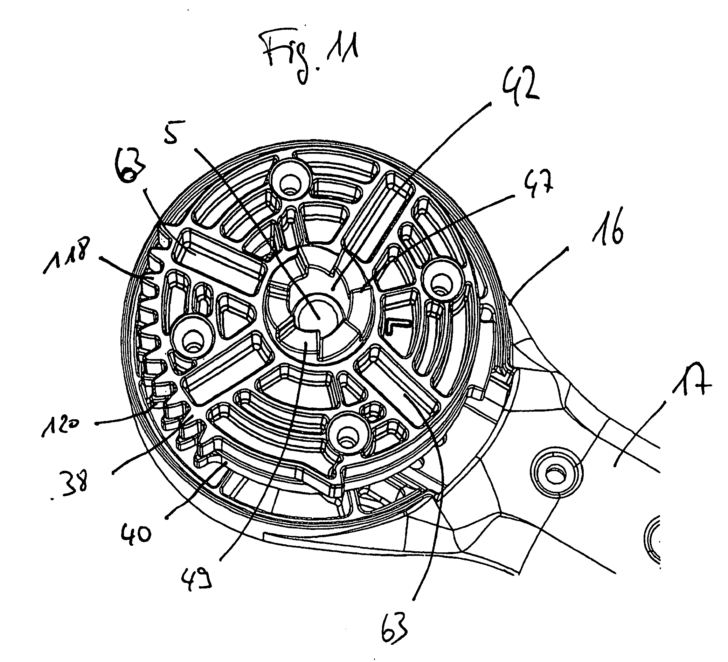

Figur 11 zeigt eine schematische Draufsicht auf die Innenseite der zweiten Gehäusehälftenabdeckung 16 mit dem zweiten Aufnahmeteil 17, wobei auf den Auslöser 42, die erste Auslöserzahnradscheibe 40 und die erste Zahnradscheibe 38 aufgesetzt sind. Mit anderen Worten, der Auslöser 42 und die Auslöserzahnradscheibe 40 sind drehbar auf der zweiten Gehäusehälftenabdeckung 16 gelagert, welche wiederum selber drehbar auf der ersten Achse 5 (angedeutet) gelagert ist. Die erste Zahnradscheibe 38 ist mit der zweiten Gehäusehälftenabdeckung 16 fest verbunden. Figur 11 entnimmt man ferner die radial sich von dem Aufnahmeloch bis zum Umfang erstreckende Einkerbung bzw. Einlässe 63, in welche hierzu in Form und Größe korrespondierende Ausbuchtungen 62 der ersten Rastscheibe 36 eingreifen können (nicht abgebildet). Außerdem zeigt Figur 11 die Zahnkranzsegmente 118, 120 von erster Zahnradscheibe 38 und erster Auslöserzahnradscheibe 40. Der Kranz 47 mit umlaufenden Entriegelungszähnen 49 des Auslösers 42 wechselwirkt mit den hierzu korrespondierenden abgeschrägten Auflageflächen der ersten Entkopplungsvorrichtung 37 der ersten Rastscheibe 36 (nicht abgebildet).

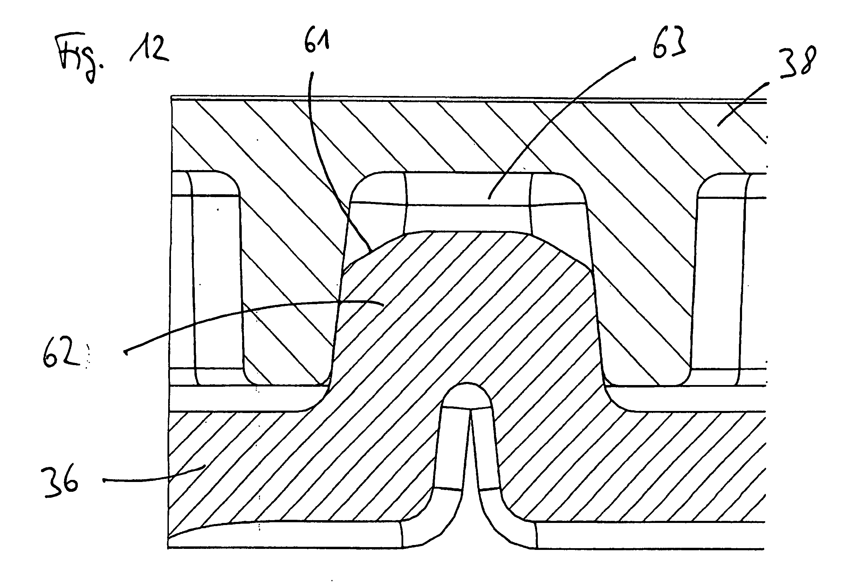

Figur 12 zeigt in schematischer Querschnittsansicht einen in einer Einkerbung bzw. einem Einlass 63 der ersten Zahnradscheibe 38 eingerastete bzw. vorliegende Ausbuchtung 62 der ersten Rastscheibe 36. Durch die vorangehend beschriebene Wechselwirkung der Entriegelungszähne 49 des Auslösers 42 mit der ersten Entkopplungsvorrichtung 37 der ersten Rastscheibe 36 wird die Ausbuchtung 62 aus dem Einlass 63 herausgedrückt, wie in Figur 12 gezeigt. Das vollständige Herausführen der Ausbuchtung 62 aus dem Einlass 63 wird dadurch erleichtert, dass in der in

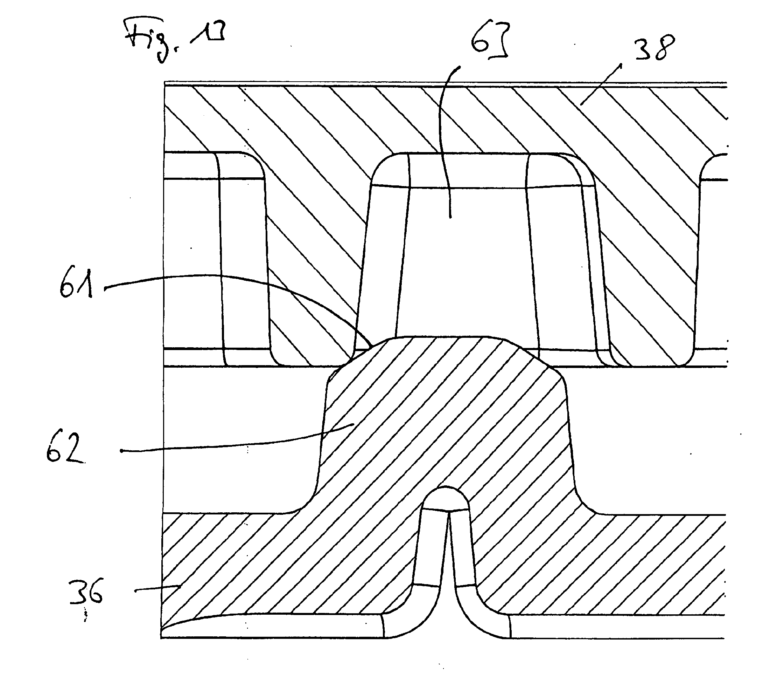

Figur 13 dargestellten Ausführungsform die Ränder 61 der Auflagefläche der Ausbuchtung 62 abgeschrägt bzw. abgerundet ausgebildet sind. Auf diese Weise lässt sich die Ausbuchtung besonders kraftsparend aus dem Einlass heraus und auch wieder hineinführen.

## Patentansprüche

1. Schwenklager (1), umfassend
a) eine erste Gehäusehälftenabdeckung (2) mit einer Innen- und einer Außenseite (4, 6), umfassend einen ersten und einen zweiten Teilabschnitt (18, 19),
b) eine zweite Gehäusehälftenabdeckung (16), die geeignet und ausgelegt ist, um mit dem ersten Teilabschnitt (18) der ersten Gehäusehälftenabdeckung (2) ein erstes Teilgehäuse zu bilden, mit einer Innen- und einer Außenseite (20, 22),
c) eine dritte Gehäusehälftenabdeckung (26), die geeignet und ausgelegt ist, um mit dem zweiten Teilabschnitt (19) der ersten Gehäusehälftenabdeckung (2) ein zweites Teilgehäuse zu bilden, mit einer Innen- und einer Außenseite (28, 30), **dadurch gekennzeichnet,**
**dass** die erste Gehäusehälftenabdeckung (2) ein erstes Aufnahmeteil (8) enthält oder mit einem ersten Aufnahmeteil (8) für eine erste Strebe verbunden bzw. verbindbar ist und dass an bzw. auf der Innenseite (4) der ersten Gehäusehälftenabdeckung (2) beabstandet voneinander vorliegende erste und zweite Einrichtungen (12, 14) vorliegen oder angebracht oder anbringbar sind, die geeignet und ausgelegt sind zur Ausbildung im Wesentlichen gleichgerichteter erster und zweiter Achsen (5, 7);
**dass** die zweite Gehäusehälftenabdeckung (16) ein zweites Aufnahmeteil (17) enthält oder mit einem zweiten Aufnahmeteil (17) für eine zweite Strebe verbunden bzw. verbindbar ist und dass an bzw. auf der Innenseite (20) der zweiten Gehäusehälftenabdeckung (16) eine dritte Einrichtung oder eine erste Anlage- und/oder Arretierungsfläche für die erste Hülse oder den ersten Wellenstummel vorliegt oder angebracht oder anbringbar ist, die geeignet und ausgelegt ist, um zusammen mit der ersten Einrichtung die erste Achse (15) zu bilden;
**dass** die dritte Gehäusehälftenabdeckung (26) ein drittes Aufnahmeteil (32) enthält oder mit einem dritten Aufnahmeteil (32) für eine dritte Strebe verbunden mit bzw.
verbindbar ist und dass an bzw. auf der Innenseite (28) der dritten Gehäusehälftenabdeckung (26) eine vierte Einrichtung vorliegt oder angebracht oder anbringbar ist, die geeignet und ausgelegt ist, um zusammen mit der zweiten Einrichtung die zweite Achse (27) zu bilden;
wobei auf der ersten Achse in der Reihenfolge wie nachfolgend aufgeführt, beginnend von der Innenseite (4) der ersten Gehäusehälftenabdeckung (2) in Richtung auf die Innenseite (20) der zweiten Gehäusehälftenabdeckung (16), vorliegen:
mindestens ein erstes elastisches Element (34), eine erste Rastscheibe (36) mit einer ersten Entkopplungsvorrichtung (37), eine erste Zahnradscheibe (38), eine erste Auslöserzahnradscheibe (40), die mit einer ersten Betätigungsvorrichtung (56) ausgestattet ist, und ein Auslöser (42) für die Drehbewegung der zweiten Strebe, ausgestattet mit einer zweiten Betätigungsvorrichtung (44), und mit mindestens einer ersten Entriegelungsvorrichtung (46), die mit der ersten Entkopplungsvorrichtung (37) der ersten Rastscheibe (36) reversibel in Wechselwirkung bringbar ist;
wobei auf der zweiten Achse in der Reihenfolge wie nachfolgend aufgeführt, beginnend von der Innenseite (4) der ersten Gehäusehälftenabdeckung (2) in Richtung auf die Innenseite (28) der dritten Gehäusehälftenabedeckung (26), vorliegen:
mindestens ein zweites elastisches Element (48), eine zweite Rastscheibe (50) mit einer zweiten Entkopplungsvorrichtung (51), eine zweite Zahnradscheibe (52) und eine zweite Auslöserzahnradscheibe (54);
wobei die erste Zahnradscheibe (38) mit der zweiten Gehäusehälftenabdeckung (16) verbunden ist,
wobei die zweite Zahnradscheibe (52) mit der dritten Gehäusehälftenabdeckung (26) verbunden ist,
wobei die erste Rastscheibe (36) über die erste Entkopplungsvorrichtung (37) in Wirkverbindung mit dem Auslöser (42) steht und
wobei die zweite Rastscheibe (50) über die zweite Entkopplungsvorrichtung (51) in Wirkverbindung mit der zweiten Auslöserzahnradscheibe (54) steht.

2. Schwenklager (1) nach Anspruch 1, **dadurch gekennzeichnet, dass**
das erste Aufnahmeteil (8) Bestandteil oder verbunden bzw. verbindbar mit dem ersten Teilabschnitt (18) ist.

3. Schwenklager (1) nach Anspruch 1 oder 2, **dadurch gekennzeichnet, dass**
die der Innenseite (4) der ersten Gehäusehälftenabdeckung (2) abgewandte Seite (60) der ersten Rastscheibe (36) mindestens über eine oder mindestens über drei erste Ausbuchtungen oder Einkerbungen (62) verfügt und dass die benachbarte Seite (64) der ersten Zahnradscheibe (38) mit mindestens einer oder mit mindestens drei hierzu komplementären Einkerbungen bzw. Ausbuchtungen ausgestattet ist, die miteinander in Eingriff bringbar sind.

4. Schwenklager (1) nach einem der vorangehenden Ansprüche, **dadurch gekennzeichnet, dass**
die zweite Rastscheibe (50) auf der der Innenseite des ersten Gehäusehälftenabdeckung (2) abgewandten Seite mindestens eine oder mindestens drei zweite Ausbuchtungen oder Einkerbungen (66) aufweist und dass die dieser Seite zugewandte Seite der zweiten Zahnradscheibe (52) mit mindestens einer oder mit mindestens drei hierzu komplementären Ausbuchtungen bzw. Einkerbungen ausgestattet ist, die miteinander in Eingriff bringbar sind.

5. Schwenklager (1) nach Anspruch 4, **dadurch gekennzeichnet, dass**
mindestens ein durch zwei benachbarte erste Einkerbungen bzw. Ausbuchtungen (62) gebildeter Schwenkwinkel im Bereich von 75° bis 150° und vorzugsweise von 80° bis 120°, liegt.

6. Schwenklager (1) nach einem der vorangehenden Ansprüche, **dadurch gekennzeichnet, dass**
das erste Zahnrad (38) ein Teilzahnrad darstellt, vorzugsweise auf seinem Umfang Zahnräder entlang eines Mittelpunktswinkels im Bereich von 30 bis 60°, insbesondere im Bereich von 35 bis 50°, aufweist, und/oder dass das zweite Zahnrad (52) ein Vollzahnrad oder ein Teilzahnrad, das auf seinem Umfang Zahnräder vorzugsweise entlang eines Mittelpunktswinkels im Bereich von 30 bis 60°, insbesondere im Bereich von 35 bis 50°, aufweist, darstellt.

7. Schwenklager (1) nach einem der vorangehenden Ansprüche, **dadurch gekennzeichnet, dass**
die erste Auslöserzahnradscheibe (40) ein Teilzahnrad darstellt, das vorzugsweise auf seinem Umfang Zahnradzähne entlang eines Mittelpunktswinkels im Bereich von 30 bis 60°, insbesondere im Bereich von 35 bis 50°, aufweist, und/oder dass die zweite Auslöserzahnradscheibe (54) ein Vollzahnrad oder ein Teilzahnrad, das vorzugsweise auf seinem Umfang Zahnräder entlang eines Mittelpunktswinkels im Bereich von 30 bis 60°, insbesondere im Bereich von 35 bis 50°, aufweist, darstellt.

8. Schwenklager (1) nach einem der vorangehenden Ansprüche, **dadurch gekennzeichnet, dass**
sich die erste Betätigungsvorrichtung (56) auf der Seite der ersten Auslöserzahnradscheibe (40) befindet, die der Innenseite (4) der ersten Gehäusehälftenabdeckung (2) abgewandt ist.

9. Schwenklager (1) nach einem der vorangehenden Ansprüche, **dadurch gekennzeichnet, dass**
die erste Auslöserzahnradscheibe (40) auf derjenigen Seite, die der Innenseite (4) der ersten Gehäusehälftenabdeckung (2) abgewandt ist, über eine Mitnehmervorrichtung (167) verfügt, die ausgelegt und angeordnet ist, um in Wechselwirkung mit der zweiten Betätigungsvorrichtung (44) des Auslösers (42) zu treten.

10. Schwenklager (1) nach Anspruch 9, **dadurch gekennzeichnet, dass** die Mitnehmervorrichtung (167) und die erste Betätigungsvorrichtung (56) der ersten Auslöserzahnradscheibe (40) benachbart angeordnet sind, insbesondere in der Weise, dass die Mitnehmervorrichtung (167) die erste Betätigungsvorrichtung (56) mit umfasst.

11. Schwenklager (1) nach einem der vorangehenden Ansprüche, **dadurch gekennzeichnet, dass**
die erste Zahnradscheibe (38) über mindestens zwei erste Anbindungsstellen (39) beabstandet an der Innenseite der zweiten Gehäusehälftenabdeckung (16) unverdrehbar mittels Befestigungsmittel, insbesondere Bolzen oder Raststifte, befestigt oder befestigbar ist.

12. Schwenklager (1) nach einem der vorangehenden Ansprüche, **dadurch gekennzeichnet, dass**
an der Seite der ersten Zahnradscheibe (38), die der Innenseite der zweien Gehäusehälfte (16) zugewandt ist, erste Abstandshalter (43), insbesondere benachbart zum Umfang der ersten Zahnradscheibe (38), vorliegen.

13. Schwenklager (1) nach einem der vorangehenden Ansprüche, **dadurch gekennzeichnet, dass**
die erste Rastscheibe (36) verdrehsicher mit, insbesondere dem ersten Teilabschnitt (18), der ersten Gehäusehälftenabdeckung (2) verbunden sowie axial reversibel verschiebbar auf der ersten Achse angeordnet ist.

14. Schwenklager (1) nach einem der vorangehenden Ansprüche, **dadurch gekennzeichnet, dass**
die zweite Rastscheibe (50) verdrehsicher mit, insbesondere dem zweiten Teilabschnitt (19), der ersten Gehäusehälftenabdeckung (2) verbunden sowie axial reversibel verschiebbar auf der zweiten Achse angeordnet ist.

15. Schwenklager (1) nach einem der vorangehenden Ansprüche, **dadurch gekennzeichnet, dass**
die erste Auslöserzahnradscheibe (40) benachbart zum Umfang mindestens zwei oder mindestens vier erste Durchstöße (45) aufweist, wobei durch jeweils einen ersten Durchstoß (45) ein erster Abstandshalter (43) hindurchtritt und wobei diese ersten Durchstöße (45) derart ausgebildet sind, dass die erste Auslöserzahnradscheibe (40) um die erste Achse partiell rotierbar ist.

16. Schwenklager (1) nach einem der vorangehenden Ansprüche, **dadurch gekennzeichnet, dass**
die zweite Auslöserzahnradscheibe (54) benachbart zum Umfang mindestens zwei oder mindestens vier zweite Durchstöße (55) aufweist, wobei durch jeweils einen zweiten Durchstoß (55) ein zweiter Abstandshalter (57) hindurchtritt und wobei diese zweiten Durchstöße (55) derart ausgebildet sind, dass die zweite Auslöserzahnradscheibe (54) um die zweite Achse partiell rotierbar ist.

17. Schwenklager (1) nach einem der vorangehenden Ansprüche, **dadurch gekennzeichnet, dass**
die erste Entriegelungsvorrichtung (46) auf der Seite des Auslösers (42) vorliegt, die der ersten Rastscheibe (36) zugewandt ist, und eine Abfolge (47) umlaufender abgeschrägter Entriegelungszähne (49), insbesondere sieben abgeschrägte Entriegelungszähne (49), aufweist.

18. Schwenklager (1) nach einem der vorangehenden Ansprüche, **dadurch gekennzeichnet, dass**
die Innenseite der zweiten Gehäusehälftenabdeckung (16) über einen ersten Anschlag (123) für die zweite Betätigungsvorrichtung (44) verfügt.

19. Schwenklager (1) nach einem der vorangehenden Ansprüche, **dadurch gekennzeichnet, dass**
die ersten und/oder zweiten Ausbuchtungen (62, 66) von erster bzw. zweiter Rastscheibe (36, 50) jeweils benachbart zur maximalen Ausdehnung der Ausbuchtung in Drehrichtung über mindestens eine abgeschrägte Fläche verfügen.

20. Schwenklager (1) nach einem der vorangehenden Ansprüche, **dadurch gekennzeichnet, dass**
die erste und die zweite Zahnradscheibe (38, 52) in der Weise in einer ersten Ebene liegen, dass bei Drehbewegung der ersten Zahnradscheibe (38) die Zähne derselben mit den Zähnen der zweiten Zahnradscheibe (52) in Einriff bringbar sind.

21. Schwenklager (1) nach einem der vorangehenden Ansprüche, **dadurch gekennzeichnet, dass**
die erste und die zweite Auslöserzahnradscheibe (40, 54) in der Weise in einer zweiten Ebene liegen, dass bei Drehbewegung der ersten Auslöserzahnradscheibe (40) die Zähne derselben mit den Zähnen der zweiten Auslöserzahnradscheibe (54) in Eingriff bringbar sind.

22. Schwenklager (1) nach einem der vorangehenden Ansprüche, ferner **gekennzeichnet durch** eine erste Haltevorrichtung (161) für ein Sitzelement, enthaltend eine Sitzfläche, oder für eine Arretierung für ein Sitzelement, umfassend eine Befestigungsvorrichtung (162), für die Anbringung der Sitzfläche oder einer Arretierungsvorrichtung für die Sitzfläche und eine Justiervorrichtung (164), mit einem ersten und einem gegenüberliegenden zweiten Ende, wobei die erste Haltevorrichtung (161) drehbar um einen ersten Befestigungspunkt (166) an der Außenseite der ersten Gehäusehälftenabdeckung (2) befestigt und gelagert ist und wobei die Justiervorrichtung (164) drehbar am ersten Ende um einen zweiten Befestigungspunkt (168) an dem dritten Aufnahmeteil (32) und/oder der dritten Strebe befestigt und gelagert ist und wobei das zweite Ende der Justiervorrichtung (164) drehbar um einen dritten Befestigungspunkt (170) an der ersten Haltevorrichtung (161) befestigt und gelagert ist, wobei die erste Haltevorrichtung (161) und die Justiervorrichtung (164) sowie der erste, zweite und dritte Befestigungspunkt (166, 168, 170) derart eingerichtet und aufeinander abgestimmt sind, dass beim Aufeinanderzubewegen von erster und dritter Strebe die Befestigungsvorrichtung (162) der ersten Haltevorrichtung (161) derart reversibel bewegbar ist, dass ein an der Befestigungsvorrichtung (162) befestigte bzw. ein, gegebenenfalls über die Arretierungsvorrichtung, befestigbares Sitzelement im zusammengeklappten Zustand des Schwenklagers eine Orientierung einnimmt, in der dessen Sitzfläche im Wesentlichen gleichgerichtet mit der ersten und/oder dritten Strebe, insbesondere mit der Vorder- und/oder Hinterradstrebe, vorliegt.

23. Schwenklager (1) nach Anspruch 22, **dadurch gekennzeichnet, dass** bei gattungsgemäßem Gebrauch des erfindungsgemäßen Schwenklagers der dritte Befestigungspunkt (170) stets auf der Seite einer durch den ersten und zweiten Befestigungspunkt (166, 168) gebildeten Linie liegt, die einer Linie, die die erste (5) und zweite Achse (7) verbindet, zugewandt ist.

24. Schwenklager (1) nach Anspruch 22 oder 23, **dadurch gekennzeichnet, dass** der erste Befestigungspunkt (166) an dem ersten Teilabschnitt (18) vorliegt und/oder dass der erste Befestigungspunkt (166) bei gattungsgemäßem Gebrauch des Schwenklagers stets weniger weit beabstandet ist von einer Linie, die die erste (5) und zweite Achse (7) verbindet, als der zweite Befestigungspunkt (168).

25. Schwenklager (1) nach einem der vorangehenden Ansprüche, **dadurch gekennzeichnet, dass** dieses ein Fahrgestellschwenklager ist.

26. Schwenklager (1) nach einem der vorangehenden Ansprüche, **dadurch gekennzeichnet, dass** die erste Strebe die vordere Stützstrebe eines Fahr- bzw. Kinderwagengestells darstellt oder
dass die ersten und zweiten Einrichtungen (12, 14) mindestens ein erstes bzw. zweites Verbindungselement oder ein mindestens ein erstes bzw. zweites Lagerelement, insbesondere erste und zweite im Wesentlichen gleichgerichtete Hülsen und/oder Wellstummel, umfassen oder
dass die zweite Strebe die Schieberstange eines Fahrgestells darstellt oder
dass die dritte Einrichtung eine dritte Hülse oder einen dritten Wellstummel oder eine erste Anlage-und/oder Arretierungsfläche für die erste Hülse oder den ersten Wellstummel umfasst oder
dass die dritte Einrichtung zusammen mit der ersten Einrichtung in Form des ersten Wellenstummels bzw. der ersten Hülse die erste Achse (5) bildet oder
dass die dritte Strebe eine hintere Stützstrebe eines Fahrgestells darstellt oder
dass die vierte Einrichtung eine vierte Hülse oder einen vierten Wellenstummel oder eine zweite Anlage-und/oder eine Arretierungsfläche für die zweite Hülse oder den zweiten Wellenstummel umfasst oder
dass die vierte Einrichtung zusammen mit der zweiten Einrichtung in Form des zweiten Wellenstummels bzw. zweiten Hülse die zweite Achse (7) bildet.

27. Schwenklager (1) nach einem der vorangehenden Ansprüche, **dadurch gekennzeichnet, dass** das erste elastische Element eine erste Druckfeder darstellt oder
dass die erste Rastscheibe (36) mit der ersten Entkopplungsvorrichtung (37) zur reversiblen Verriegelung der zweiten Strebe relativ zu der ersten Strebe geeignet ist oder
dass die erste Betätigungsvorrichtung (56) eine Betätigungsvorrichtung für einen Seilund Bowdenzug darstellt oder
dass die zweite Betätigungsvorrichtung (44) eine Betätigungsvorrichtung für einen Seiloder Bowdenzug darstellt oder
dass das zweite elastische Element eine zweite Druckfeder darstellt oder
dass die zweite Rastscheibe (50) mit der zweiten Entkopplungsvorrichtung (51) zur reversiblen Verriegelung der dritten Strebe relativ zu der ersten Strebe geeignet ist.

28. Schwenklager (1) nach einem der Ansprüche 22 bis 27, **dadurch gekennzeichnet, dass** die Befestigungsvorrichtung (162) einen Befestigungsbügel darstellt oder dass die Justiervorrichtung (164) eine Justierleiste darstellt.

29. Fahrgestell (111), umfassend
zwei zur Längsachse des Fahrgestells spiegelbildlich angeordnete, von vorne nach hinten ansteigend verlaufende vordere Stützstreben, an deren unteren Enden, gegebenenfalls mit zwischengeschalteten Haltern und/oder Lagern und/oder Achsen, Vorderräder anbringbar sind oder vorliegen oder die mit einem verbindenden Brückenelement ausgestattet sind, an das mindestens ein Vorderrad angebracht oder anbringbar ist;
zwei zur Längsachse des Fahrgestells spiegelbildlich angeordnete hintere Stützstreben, an deren unteren Enden, gegebenenfalls mit zwischengeschalteten Haltern und/oder Lagern und/oder Achsen, Hinterräder anbringbar sind oder vorliegen;
zwei Schiebestangen, an deren oberen Enden einzelne Schiebegriffe oder ein verbindender Schiebebügel angebracht oder anbringbar sind;
ein erstes Schwenklager (1) gemäß einem der vorangehenden Ansprüche und ein zweites Schwenklager (1') gemäß einem der vorangehenden Ansprüche;
wobei die vorderen Stützstreben erste Streben darstellen und jeweils in den ersten Aufnahmeteilen (8, 8') von erstem und zweitem Schwenklager (1, 1') vorliegen, wobei die Schieberstangen zweite Streben darstellen und jeweils in den zweiten Aufnahmeteilen (17, 17') von erstem und zweitem Schwenklager (1, 1') vorliegen, und
wobei die hinteren Stützstreben dritte Streben darstellen und jeweils in den dritten Aufnahmeteilen (32, 32') von erstem und zweitem Schwenklager (1, 1') vorliegen,
wobei die Schiebestangen über die Schwenklager (1, 1') jeweils nach vorne in Richtung der vorderen Stützstreben verschwenkbar sind,
wobei die hintere Stützstrebe über die Schwenklager (1, 1') jeweils nach vorne in eine Verstauposition verschwenkbar sind und
wobei die Schwenklager (1, 1') derart ausgebildet sind, dass beim Vorschwenken der Schiebestangen in Richtung der vorderen Stützstrebe durch Drehbewegungstransformation die hintere Stützstrebe automatisch nach vorne verschwenkbar ist.

30. Fahrgestell nach Anspruch 29, **dadurch gekennzeichnet, dass** dieses ein Kinderwagengestell darstellt.

31. Fahrgestell nach Anspruch 29 oder 30, **dadurch gekennzeichnet, dass** an dem verbindenden Brückenelement mindestens ein Vorderrad mittig angebracht oder anbringbar ist oder dass die zwei zur Längsachse des Fahrgestells spiegelbildlich angeordneten hinteren Stützstreben von hinten nach vorne verlaufen.

32. Verwendung des Schwenklagers gemäß einem der Ansprüche 1 bis 28 für Fahrgestelle, insbesondere Kinderwagen.

## Claims

1. A pivot bearing (1), comprising
a) a first housing half covering (2) with an inner and an outer side (4, 6), comprising a first and a second partial section (18, 19),
b) a second housing half covering (16) which is suitable and designed, together with the first partial section (18) of the first housing half covering (2), to form a first partial housing, with an inner and an outer side (20, 22)
c) a third housing half covering (26) which is suitable and designed, together with the second partial section (19) of the first housing half covering (2), to form a second partial housing, with an inner and an outer side (28, 30), **characterized in that**
the first housing half covering (2) contains a first retaining part (8) or is connected or connectable to a first retaining part (8) for a first bar, and that at or on the inner side (4) of the first housing half covering (2) first and second facilities (12, 14) are present or are attached or are attachable which are at a distance from each other and are suitable and designed for forming first and second axes (5, 7) which essentially have the same orientation;
the second housing half covering (16) contains a second retaining part (17) or is connected or connectable to a second retaining part (17) for a second bar, and that at or on the inner side (20) of the second housing half covering (16), a third facility or a first rest and/or stop surface for the first sleeve or the first shaft stump is present or is attached or is attachable, which is suitable and designed to form the first axis (15) together with the first facility;
the third housing half covering (26) contains a third retaining part (32) or is connected or connectable to a third retaining part (32) for a third bar, and that at or on the inner side (28) of the third housing half covering (26), a fourth facility is present or is attached or is attachable which is suitable and designed for forming the second axis (27) together with the second facility;
wherein on the first axis, the following are present in the sequence as listed below, beginning from the inner side (4) of the first housing half covering (2) in the direction of the inner side (20) of the second housing half covering (16):
at least one first elastic element (34), a first latch disc (36) with a first decoupling device (37), a first gearwheel disc (38), a first trigger gearwheel disc (40), which is equipped with a first actuation device (56), and a triggering device (42) for the rotational movement of the second bar, equipped with a second actuation device (44), and with at least one first unlocking device (46) which can be reversibly brought to interact with the first decoupling device (37) of the first latch disc (36);
wherein on the second axis, the following are present in the sequence as listed below, beginning from the inner side (4) of the first housing half covering (2) in the direction of the inner side (28) of the third housing half covering (26):
at least one second elastic element (48), a second latch disc (50) with a second decoupling device (51), a second gearwheel disc (52) and a second trigger gearwheel disc (54);
wherein the first gearwheel disc (38) is connected to the second housing half covering (16),
wherein the second gearwheel disc (52) is connected to the third housing half covering (26),
wherein the first latch disc (36) interacts with the triggering device (42) via the first decoupling device (37), and
wherein the second latch disc (50) interacts with the second trigger gearwheel disc (54) via the decoupling device (51).

2. The pivot bearing (1) according to claim 1, **characterized in that** the first retaining part (8) is an integral part of or is connected or is connectable to the first partial section (18).

3. The pivot bearing (1) according to claim 1 or 2, **characterized in that** the side (60) of the first latch disc (36) which faces away from the inner side (4) of the first housing half covering (2) has at least one or at least three first indentations or notches (62), and that the adjacent side (64) of the first gearwheel disc (38) is provided with at least one or at least three complementary notches or indentations, which can be interlocked with each other.

4. The pivot bearing (1) according to any one of the preceding claims, **characterized in that**
the second latch disc (50) on the side which faces away from the inner side of the first housing half covering (2) comprises at least one or at least three second indentations or notches (66) and the side of the second gearwheel disc (52) which faces towards this side is provided with at least one or at least three complementary indentations or notches, which can be interlocked with each other.

5. The pivot bearing (1) according to claim 4, **characterized in that** at least one pivot angle formed by two adjacent first notches or indentations (62) lies in the range from 75° to 150°, and preferably from 80° to 120°.

6. The pivot bearing (1) according to any one of the preceding claims, **characterized in that**
the second gearwheel (38) is a partial gearwheel, preferably comprises gearwheels along a middle point angle in the range from 30 to 60°, in particular in the range from 35 to 50°, and/or that the second gearwheel (52) is a full gearwheel or a partial gearwheel which on its circumference comprises gearwheels, preferably along a middle point angle in the range from 30 to 60°, in particular in the range from 35 to 50°.

7. The pivot bearing (1) according to any one of the preceding claims, **characterized in that**
the first trigger gearwheel disc (40) is a partial gearwheel which preferably comprises on its circumference gear teeth along a middle point angle in the range from 30 to 60°, in particular in the range from 35 to 50°, and/or that the second trigger gearwheel disc (54) is a full gearwheel or a partial gearwheel which preferably comprises on its circumference gearwheels along a middle point angle in the range from 30 to 60°, in particular in the range from 35 to 50°.

8. The pivot bearing (1) according to any one of the preceding claims, **characterized in that**
the first actuation device (56) is located on the side of the first trigger gearwheel disc (40) which faces away from the inner side (4) of the first housing half covering (2).

9. The pivot bearing (1) according to any one of the preceding claims, **characterized in that**
the first trigger gearwheel disc (40) on the side which faces away from the inner side (4) of the first housing half covering (2) has a carrier device (167) which is designed and arranged in order to interact with the second actuation device (44) of the triggering device (42).

10. The pivot bearing (1) according to claim 9, **characterized in that** the carrier device (167) and the first actuation device (56) of the first trigger gearwheel disc (40) are arranged adjacent to each other, in particular in such a manner that the carrier device (167) also comprises the first actuation device (56).

11. The pivot bearing (1) according to any one of the preceding claims, **characterized in that**
the first gearwheel disc (38) is affixed or can be affixed via at least two first connection points (39) at a distance from each other on the inner side of the second housing half covering (16) in a non-rotatable manner by means of affixing means, in particular bolts or latch pins.

12. The pivot bearing (1) according to any one of the preceding claims, **characterized in that**
on the side of the first gearwheel disc (38) which faces towards the inner side of the second housing half (16), first spacers (43) are present, in particular adjacent to the circumference of the first gearwheel disc (38).

13. The pivot bearing (1) according to any one of the preceding claims, **characterized in that**
the first latch disc (36) is connected in a non-rotatable manner, in particular with the first partial section (18) of the first housing half covering (2), and is arranged in such a manner that it can be reversibly displaced axially on the first axis.

14. The pivot bearing (1) according to any one of the preceding claims, **characterized in that**
the second latch disc (50) is connected in a non-rotatable manner, in particular with the second partial section (19) of the first housing half covering (2) and is arranged in such a manner that it can be reversibly displaced axially on the second axis.

15. The pivot bearing (1) according to any one of the preceding claims, **characterized in that**
the first trigger gearwheel disc (40) comprises, adjacent to the circumference, at least two or at least four first punch holes (45), wherein a first spacer (43) passes through one first punch hole (45) respectively and wherein these first punch holes (45) are designed in such a manner that the first trigger gearwheel disc (40) is partially rotatable about the first axis.

16. The pivot bearing (1) according to any one of the preceding claims, **characterized in that**
the second trigger gearwheel disc (54) comprises, adjacent to the circumference, at least two or at least four second punch holes (55), wherein a second spacer (57) passes through a second punch hole (55) respectively and wherein these second punch holes (55) are designed in such a manner that the second trigger gearwheel disc (54) is partially rotatable about the second axis.

17. The pivot bearing (1) according to any one of the preceding claims, **characterized in that**
the first unlocking device (46) is present on the side of the triggering device (42) which faces towards the first latch disc (36), and comprises a sequence (47) of circumferential bevelled unlocking teeth (49), in particular seven bevelled unlocking teeth (49).

18. The pivot bearing (1) according to any one of the preceding claims, **characterized in that**
the inner side of the second housing half covering (16) has a first stop (123) for the second actuation device (44).

19. The pivot bearing (1) according to any one of the preceding claims, **characterized in that**
the first and/or second indentations (62, 66) of the first or second latch disc (36, 50) have at least one bevelled surface which is adjacent to the maximum extension of the indentation in the rotational direction in each case.

20. The pivot bearing (1) according to any one of the preceding claims, **characterized in that**
the first and second gearwheel disc (38, 52) lie on a first plane in such a manner that with a rotational movement of the first gearwheel disc (38), its teeth can be interlocked with the teeth of the second gearwheel disc (52).

21. The pivot bearing (1) according to any one of the preceding claims, **characterized in that**
the first and second trigger gearwheel discs (40, 54) lie on a second plane in such a manner that with a rotational movement of the first trigger gearwheel disc (40), its teeth can be interlocked with the teeth of the second trigger gearwheel disc (54).

22. The pivot bearing (1) according to any one of the preceding claims, further **characterized by** a first retaining device (161) for a seat element, containing a seat surface, or for stopping a seat element, comprising an affixing device (162) for attaching the seat surface or a stopping device for the seat surface and an adjusting device (164) with a first and an opposite second end, wherein the first retaining device (161) is affixed and supported on the outer side of the first housing half covering (2) in such a manner that it can be rotated about a first affixing point (166), and wherein the adjusting device (164) is affixed and supported on the third retaining part (32) and/or the third bar in such a manner that it can be rotated about a second affixing point (168) on its first end, and wherein the second end of the adjusting device (164) is affixed and supported on the first retaining device (161) in such a manner that it can be rotated about a third affixing point (170), wherein the first retaining device (161) and the adjusting device (164), together with the first, second and third affixing point (166, 168, 170) are installed and coordinated in such a manner that when the first and third bars are moved towards each other, the affixing device (162) of the first retaining device (161) is reversibly movable in such a manner that a seat element which is affixed to the affixing device (162) or, if appropriate, can be affixed thereto via the stopping device, adopts an orientation when the pivot bearing is folded in, in which its seat surface essentially has the same orientation as the first and/or third bar, in particular the front and/or rear wheel bar.

23. The pivot bearing (1) according to claim 22, **characterized in that**, with the generic use of the pivot bearing according to the invention, the third affixing point (170) always lies on the side of a line formed by the first and second affixing point (166, 168) which faces towards a line which connects the first (5) and the second axis (7).

24. The pivot bearing (1) according to claim 22 or 23, **characterized in that** the first affixing point (166) is present on the first partial section (18) and/or that, with the generic use of the pivot bearing, the first affixing point (166) is always less further away from a line which connects the first (5) and second axis (7) than the second affixing point (168).

25. The pivot bearing (1) according to any one of the preceding claims, **characterized in that** it is a chassis pivot bearing.

26. The pivot bearing (1) according to any one of the preceding claims, **characterized in that**
the first bar is the front supporting bar of a chassis or pram frame, or
the first and second facilities (12, 14) comprise at least one first or second connecting element or at least one first or second bearing element, in particular first and second sleeves and/or shaft stumps which essentially have the same orientation, or
the second bar is the pushing rod of a chassis, or
the third facility comprises a third sleeve or a third shaft stump or a first rest and/or stop surface for the first sleeve or the first shaft stump, or
the third facility together with the first facility in the form of the first shaft stump or the first sleeve forms the first axis (5) or
the third bar is a rear supporting bar of a chassis, or
the fourth facility comprises a fourth sleeve or a fourth shaft stump or a second rest and/or stop surface for the second sleeve or the second shaft stump, or
the fourth facility together with the second facility in the form of the second shaft stump or the second sleeve forms the second axis (7).

27. The pivot bearing (1) according to any one of the preceding claims, **characterized in that**
the first elastic element is a first pressure spring, or
the first latch disc (36) with the first decoupling device (37) is suitable for the reversible locking of the second bar relative to the first bar, or
the first actuation device (56) is an actuation device for a rope or Bowden cable, or the second actuation device (44) is an actuation device for a rope or Bowden cable, or the second elastic element is a second pressure spring, or
the second latch disc (50) with the second decoupling device (51) is suitable for the reversible locking of the third bar relative to the first bar.

28. The pivot bearing (1) according to any one of claims 22 to 27, **characterized in that** the affixing device (162) is an affixing bracket, or that the adjusting device (164) is an adjusting strip.

29. A chassis (111) comprising
two front supporting bars arranged in mirror image to the longitudinal axis of the chassis, running upwards from the front to the rear, on the lower ends of which, if appropriate with interim fasteners and/or bearings and/or axes, front wheels can be attached or are present, or which are equipped with a connectable bridge element, to which at least one front wheel is attached or can be attached;
two rear supporting bars arranged in mirror image to the longitudinal axis of the chassis, on the lower ends of which, if appropriate with interim fasteners and/or bearings and/or axes, rear wheels can be attached or are present;
two pushing rods, on the upper ends of which individual pushing grips or a connecting pushing rod is attached or can be attached;
a first pivot bearing (1) according to any one of the preceding claims and a second pivot bearing (1') according to any one of the preceding claims;
wherein the front supporting bars are first bars and are respectively present in the first retaining parts (8, 8') of the first and second pivot bearings (1, 1'), wherein the pushing rods are two bars and are respectively present in the second retaining parts (17, 17') of the first and second pivot bearings (1, 1'), and
wherein the rear supporting bars are third bars and are respectively present in the third retaining parts (32, 32') of the first and second pivot bearings (1, 1'),
wherein the pushing rods can be respectively pivoted forwards in the direction of the front supporting bars via the pivot bearings (1, 1'),
wherein the rear supporting bar can be pivoted forwards into a packed-away position via the pivot bearings (1, 1'), and
wherein the pivot bearings (1, 1') are designed in such a manner that when the pushing rods are pivoted forwards in the direction of the front supporting rod, the rear supporting rod can automatically be pivoted forwards due to rotational movement transformation.

30. The chassis according to claim 29, **characterized in that** it is a pram frame.

31. The chassis according to claim 29 or 30, **characterized in that** at least one front wheel is centrally attached or can be attached on the connecting bridge element, or that the two rear supporting bars which are arranged in mirror image to the longitudinal axis of the chassis run from back to front.

32. The use of the pivot bearing according to any one of claims 1 to 28 for chassis, in particular prams.

## Revendications

1. Palier d'articulation (1), comprenant
a) une première protection de moitié de carter (2) avec un côté intérieur et un côté extérieur (4, 6), comprenant une première et une deuxième section partielle (18, 19),
b) une deuxième protection de moitié de carter (16), laquelle est appropriée et conçue pour former un premier boîtier partiel avec un côté intérieur et un côté extérieur (20, 22), avec la première section partielle (18) de la première protection de moitié de carter (2),
c) une troisième protection de moitié de carter (26), laquelle est appropriée et conçue pour former un deuxième boîtier partiel avec un côté intérieur et un côté extérieur (28, 30), avec la deuxième section partielle (19) de la première protection de moitié de carter (2), **caractérisé en ce que**
la première protection de moitié de carter (2) comprend une première pièce de réception (8) ou est reliée ou reliable avec une première pièce de réception (8) pour une première barre, et **en ce que**, contre ou sur le côté intérieur (4) de la première protection de moitié de carter (2), des premiers et deuxièmes dispositifs (12, 14) disposés à distance l'un de l'autre sont appliqués ou fixés ou fixables, lesquels sont appropriés et conçus pour la formation d'un premier et d'un deuxième axe (5, 7) ayant essentiellement la même orientation ;
**en ce que** la deuxième protection de moitié de carter (16) comprend une deuxième pièce de réception (17) ou est reliée ou reliable avec une deuxième pièce de réception (17) pour une deuxième barre, et **en ce que**, contre ou sur le côté intérieur (20) de la deuxième protection de moitié de carter (16), un troisième dispositif ou une première surface d'application et/ou de blocage pour la première gaine ou le premier bout d'arbre est appliqué(e) ou fixé(e) ou fixable, lesquels sont appropriés et conçus pour former le premier axe (5), avec le premier dispositif ;
**en ce que** la troisième protection de moitié de carter (26) comprend une troisième pièce de réception (32) ou est reliée ou reliable avec une troisième pièce de réception (32) pour une troisième barre, et **en ce que**, contre ou sur le côté intérieur (28) de la troisième protection de moitié de carter (26), un quatrième dispositif est appliqué ou fixé ou fixable, lequel est approprié et conçu pour former le deuxième axe (27), conjointement avec le deuxième dispositif;
étant appliqués, sur le premier axe dans l'ordre indiqué ci-après, en commençant par le côté intérieur (4) de la première protection de moitié de carter (2) en direction du côté intérieur (20) de la deuxième protection de moitié de carter (16) :
au moins un premier élément élastique (34), un premier disque d'arrêt (36) avec un premier dispositif de découplage (37), un premier disque de roue dentée (38), un premier disque de roue dentée déclencheur (40), lequel est muni d'un premier dispositif d'actionnement (56), et un déclencheur (42) pour le mouvement de rotation de la deuxième barre, muni d'un deuxième dispositif d'actionnement (44) et avec au moins un premier dispositif de déverrouillage (46), lequel peut être amené à interagir de façon réversible avec le premier dispositif de découplage (37) du premier disque d'arrêt (36) ;
étant appliqués, sur le deuxième axe dans l'ordre indiqué ci-après, en commençant par le côté intérieur (4) de la première protection de moitié de carter (2) en direction du côté intérieur (28) de la troisième protection de moitié de carter (26) :
au moins un deuxième élément élastique, un deuxième disque d'arrêt (50) avec un deuxième dispositif de découplage (51), un deuxième disque de roue dentée (52) et un deuxième disque de roue dentée déclencheur (54) ;
le premier disque de roue dentée (38) étant relié avec la deuxième protection de moitié de carter (16),
le deuxième disque de roue dentée (52) étant relié avec la troisième protection de moitié de carter (26),
le premier disque d'arrêt (36) étant en relation active avec le déclencheur (42), par le premier dispositif de découplage (37), et
le deuxième disque d'arrêt (50) étant en relation active avec le deuxième disque de roue dentée déclencheur (54), par le deuxième dispositif de découplage (51).

2. Palier d'articulation (1) selon la revendication 1, **caractérisé en ce que** la première pièce de réception (8) fait partie de ou est reliée ou reliable avec la première section partielle (18).

3. Palier d'articulation (1) selon la revendication 1 ou 2, **caractérisé en ce que** le côté du premier disque d'arrêt (36) tourné vers l'opposé du côté intérieur (4) de la première protection de moitié de carter (2) dispose au moins d'une ou au moins de trois premières bosses sortantes ou encoches (62), et **en ce que** le côté adjacent (64) au premier disque de roue dentée (38) est muni d'au moins une ou d'au moins trois encoches ou bosses sortantes complémentaires de celles-ci, lesquelles peuvent être engagées les unes dans les autres.

4. Palier d'articulation (1) selon l'une des revendications précédentes, **caractérisé en ce que**
le deuxième disque d'arrêt (50) présente sur le côté tourné vers l'opposé du côté intérieur de la première protection de moitié de carter (2) au moins une ou au moins trois deuxièmes bosses sortantes ou encoches (66), et **en ce que** le côté tourné vers ce côté du deuxième disque de roue dentée (52) est muni d'au moins une ou d'au moins trois bosses sortantes ou encoches complémentaires de celles-ci, lesquelles peuvent être engagées les unes dans les autres.

5. Palier d'articulation (1) selon la revendication 4, **caractérisé en ce que** au moins un angle de basculement formé par deux premières encoches ou bosses sortantes (62) voisines se trouve dans une plage de 75° à 150° et de préférence de 80° à 120°.

6. Palier d'articulation (1) selon l'une des revendications précédentes, **caractérisé en ce que**
la première roue dentée (38) représente une roue dentée partielle, présente de préférence sur sa circonférence des roues dentées le long d'un angle au centre dans la plage de 30 à 60°, en particulier dans la plage de 35 à 50°, et/ou **en ce que** la deuxième roue dentée (52) représente une roue dentée complète ou une roue dentée partielle, laquelle présente sur sa circonférence des roues dentées de préférence le long d'un angle au centre dans la plage de 30 à 60°, en particulier dans la plage de 35 à 50°.

7. Palier d'articulation (1) selon l'une des revendications précédentes, **caractérisé en ce que**
le premier disque de roue dentée déclencheur (40) représente une roue dentée partielle, laquelle présente de préférence sur sa circonférence des dents d'engrenage le long d'un angle au centre dans la plage de 30 à 60°, en particulier dans la plage de 35 à 50°, et/ou **en ce que** le deuxième disque de roue dentée déclencheur (54) représente une roue dentée complète ou une roue dentée partielle, laquelle présente sur sa circonférence des roues dentées de préférence le long d'un angle au centre dans la plage de 30 à 60°, en particulier dans la plage de 35 à 50°.

8. Palier d'articulation (1) selon l'une des revendications précédentes, **caractérisé en ce que**
le premier dispositif d'actionnement (56) se trouve sur le côté du premier disque de roue dentée déclencheur (40) qui est tourné vers l'opposé du côté intérieur (4) de la première protection de moitié de carter (2).

9. Palier d'articulation (1) selon l'une des revendications précédentes, **caractérisé en ce que**
le premier disque de roue dentée déclencheur (40) sur le côté qui est tourné vers l'opposé du côté intérieur (4) de la première protection de moitié de carter (2) dispose d'un dispositif d'entraînement (167), lequel est conçu et disposé afin d'interagir avec le deuxième dispositif d'actionnement (44) du déclencheur (42).

10. Palier d'articulation (1) selon la revendication 9, **caractérisé en ce que** le dispositif d'entraînement (167) et le premier dispositif d'actionnement (56) du premier disque de roue dentée déclencheur (40) sont disposés de façon adjacente, en particulier de manière telle que le dispositif d'entraînement (167) comprend le premier dispositif d'actionnement (56).

11. Palier d'articulation (1) selon l'une des revendications précédentes, **caractérisé en ce que**
le premier disque de roue dentée (38) est fixé ou fixable par au moins deux premiers emplacements de liaison (39) à distance sur le côté intérieur de la deuxième protection de moitié de carter (16) sans possibilité de rotation au moyen d'un élément de fixation, en particulier des boulons ou des chevilles d'arrêt.

12. Palier d'articulation (1) selon l'une des revendications précédentes, **caractérisé en ce que**
sur le côté du premier disque de roue dentée (38), lequel est tourné vers le côté intérieur de la deuxième moitié de boîtier (16), des premiers éléments d'espacement (43) sont disposés, en particulier de façon adjacente à la circonférence du premier disque de roue dentée (38).

13. Palier d'articulation (1) selon l'une des revendications précédentes, **caractérisé en ce que**
le premier disque d'arrêt (36) est relié avec la première protection de moitié de carter (2), en particulier la première section partielle (18), ainsi que disposé sur le premier axe de façon déplaçable et réversible axialement, sans pouvoir tourner.

14. Palier d'articulation (1) selon l'une des revendications précédentes, **caractérisé en ce que**
le deuxième disque d'arrêt (50) est relié avec la première protection de moitié de carter (2), en particulier la deuxième section partielle (19), ainsi que disposé sur le deuxième axe de façon déplaçable et réversible axialement, sans pouvoir tourner.

15. Palier d'articulation (1) selon l'une des revendications précédentes, **caractérisé en ce que**
le premier disque de roue dentée déclencheur (40) présente de façon adjacente à la circonférence au moins deux ou au moins quatre premières perforations (45), un premier élément d'espacement (43) passant respectivement par une première perforation (45), et ces premières perforations (45) étant formées de telle sorte que le premier disque de roue dentée déclencheur (40) est pivotable partiellement sur le premier axe.

16. Palier d'articulation (1) selon l'une des revendications précédentes, **caractérisé en ce que**
le deuxième disque de roue dentée déclencheur (54) présente de façon adjacente à la circonférence au moins deux ou au moins quatre deuxièmes perforations (55), un deuxième élément d'espacement (57) passant respectivement par une deuxième perforation (55), et ces deuxièmes perforations (55) étant formées de telle sorte que le deuxième disque de roue dentée déclencheur (54) est pivotable partiellement sur le deuxième axe.

17. Palier d'articulation (1) selon l'une des revendications précédentes, **caractérisé en ce que**
le premier dispositif de déverrouillage (46) est disposé sur le côté du déclencheur (42) qui est tourné vers le premier disque d'arrêt (36), et présente une succession (47) de dents de déverrouillage biseautées (49) sur la circonférence, en particulier sept dents de déverrouillage biseautées (49).

18. Palier d'articulation (1) selon l'une des revendications précédentes, **caractérisé en ce que**
le côté intérieur de la deuxième protection de moitié de carter (16) dispose d'une première butée (123) pour le deuxième dispositif d'actionnement (44).

19. Palier d'articulation (1) selon l'une des revendications précédentes, **caractérisé en ce que**
les premières et/ou deuxièmes bosses sortantes (62, 66) du premier ou deuxième disque d'arrêt (36, 50) disposent, respectivement de façon adjacente à l'étendue maximale de la bosse sortante dans le sens de rotation, d'au moins une surface biseautée.

20. Palier d'articulation (1) selon l'une des revendications précédentes, **caractérisé en ce que**
le premier et le deuxième disques de roue dentée (38, 52) sont placés dans un premier plan de telle sorte que lors d'un mouvement de rotation du premier disque de roue dentée (38), les dents de celui-ci peuvent être engagés dans les dents du deuxième disque de roue dentée (52).

21. Palier d'articulation (1) selon l'une des revendications précédentes, **caractérisé en ce que**
le premier et le deuxième disques de roue dentée déclencheur (40, 54) sont placés dans un deuxième plan de telle sorte que lors d'un mouvement de rotation du premier disque de roue dentée déclencheur (40), les dents de celui-ci peuvent être engagés dans les dents du deuxième disque de roue dentée déclencheur (54).

22. Palier d'articulation (1) selon l'une des revendications précédentes, **caractérisé en outre par** un premier premier dispositif de maintien (161) pour un élément de siège, comprenant une surface de siège, ou pour un élément de blocage pour un élément de siège, comprenant un dispositif de fixation (162), pour le placement de la surface de siège ou d'un dispositif de blocage pour la surface de siège et pour un dispositif de réglage (164), avec une première extrémité et une deuxième extrémité du côté opposé, le premier dispositif de maintien (161) étant fixé et suspendu de façon pivotante sur le côté extérieur de la première protection de moitié de carter (2) autour d'un premier point de fixation (166), et le dispositif de réglage (164) étant fixé et suspendu sur la première extrémité de façon pivotante autour d'un deuxième point de fixation (168) sur le troisième élément de réception (32) et/ou la troisième barre, et la deuxième extrémité du dispositif de réglage (164) étant fixée et suspendue sur le premier dispositif de maintien (161) de façon pivotante autour d'un troisième point de fixation (170), le premier dispositif de maintien (161) et le dispositif de réglage (164) ainsi que les premier, deuxième et troisième points de fixation (166, 168, 170) étant installés et ajustés entre eux de telle sorte que, lors du mouvement l'une vers l'autre de la première et de la troisième barre, le dispositif de fixation (162) du premier dispositif de maintien (161) est déplaçable de façon réversible de telle sorte qu'un élément de siège fixé sur le dispositif de fixation (162) ou un élément de siège, le cas échéant fixable par le dispositif de blocage prend, lorsque le palier d'articulation est en état replié, une orientation telle que sa surface de siège est disposée essentiellement dans le même sens que la première et/ou la troisième barre, en particulier avec la barre de roue avant et/ou de roue arrière.

23. Palier d'articulation (1) selon la revendication 22, **caractérisé en ce que** lors d'une utilisation conforme à la nature du palier d'articulation conforme à l'invention, le troisième point de fixation (170) se trouve toujours sur le côté d'une ligne formée par le premier et le deuxième point de fixation (166, 168), lequel est tourné vers une ligne qui relie le premier (5) et le deuxième axe (7).

24. Palier d'articulation (1) selon la revendication 22 ou 23, **caractérisé en ce que** le premier point de fixation (166) est disposé sur la première section partielle (18) et/ou en ce que le premier point de fixation (166), lors d'une utilisation conforme à la nature du palier d'articulation, est toujours moins écarté d'une ligne reliant le premier (5) et le deuxième axe (7) que le deuxième point de fixation (168).

25. Palier d'articulation (1) selon l'une des revendications précédentes, **caractérisé en ce que** celui-ci est un palier d'articulation de châssis.

26. Palier d'articulation (1) selon l'une des revendications précédentes, **caractérisé en ce que** la première barre représente la barre d'appui avant d'un châssis ou d'un châssis de poussette, ou
**en ce que** les premier et deuxième dispositifs (12, 14) comprennent au moins un premier ou un deuxième élément de raccordement ou au moins un premier ou un deuxième élément de suspension, en particulier des premières et deuxièmes gaines et/ou bouts d'arbre essentiellement orientés dans le même sens, ou
**en ce que** la deuxième barre représente la tige de poussée d'un châssis ou **en ce que** le troisième dispositif comprend une troisième gaine ou un troisième bout d'arbre ou une première surface d'appui et/ou de blocage pour la première gaine ou le premier bout d'arbre, ou
**en ce que** le troisième dispositif forme conjointement avec le premier dispositif le premier axe (5), sous la forme du premier bout d'arbre ou de la première gaine, ou en ce que la troisième barre représente la barre d'appui arrière d'un châssis, ou
**en ce que** le quatrième dispositif comprend une quatrième gaine ou un quatrième bout d'arbre ou une deuxième surface d'appui et/ou de blocage pour la deuxième gaine ou le deuxième bout d'arbre, ou
**en ce que** le quatrième dispositif forme conjointement avec le deuxième dispositif le deuxième axe (7), sous la forme du deuxième bout d'arbre ou de la deuxième gaine.

27. Palier d'articulation (1) selon l'une des revendications précédentes, **caractérisé en ce que** le premier élément élastique représente un premier ressort de pression, ou
**en ce que** le premier disque d'arrêt (36) est approprié pour le verrouillage réversible de la deuxième barre relativement à la première barre, avec le premier dispositif de découplage (37), ou
**en ce que** le premier dispositif d'actionnement (56) représente un dispositif d'actionnement pour un câble de commande et Bowden, ou
**en ce que** le deuxième dispositif d'actionnement (44) représente un dispositif d'actionnement pour un câble de commande et Bowden, ou
**en ce que** le deuxième élément élastique représente un deuxième ressort de pression, ou
**en ce que** le deuxième disque d'arrêt (50) est approprié pour le verrouillage réversible de la troisième barre relativement à la première barre, avec le deuxième dispositif de couplage (51).

28. Palier d'articulation (1) selon l'une des revendications 22 à 27, **caractérisé en ce que** le dispositif de fixation (162) représente un étrier de fixation ou **en ce que** le dispositif de réglage (164) représente une baguette de réglage.

29. Châssis (111), comprenant
deux barres d'appui avant s'étendant progressivement de l'avant vers l'arrière et disposées de façon symétriquement opposée par rapport à l'axe longitudinal du châssis, aux extrémités inférieures desquelles, le cas échéant avec des fixations et/ou des paliers et/ou des axes interposées, des roues avants sont montables ou placées, ou qui sont équipées d'un élément-pont faisant raccordement, sur lequel au moins une roue avant est montée ou montable ;
deux barres d'appui arrière disposées de façon symétriquement opposée par rapport à l'axe longitudinal du châssis, aux extrémités inférieures desquelles des roues arrières peuvent être montées ou sont placées, sur lesquelles des roues arrières sont montables ou placées, le cas échéant avec des fixations et/ou des paliers et/ou des axes interposées ;
deux tiges de poussée, sur les extrémités supérieures desquelles des poignées de poussée individuelles ou un guidon formant un raccordement sont montés ou montables ;
un premier palier d'articulation (1) conforme à l'une des revendications précédentes et un deuxième palier d'articulation (1') conforme à l'une des revendications précédentes;
les premières barres d'appui avant représentant des premières barres et étant disposées respectivement dans les premières pièces de réception (8, 8') du premier et du deuxième paliers d'articulation (1, 1'), les tiges de poussée représentant des deuxièmes barres et étant disposées respectivement dans les deux deuxièmes pièces de réception (17, 17') du premier et du deuxième paliers d'articulation (1, 1'), et
les barres d'appui arrières représentant des troisièmes barres et étant disposées respectivement dans les troisièmes pièces de réception (32, 32') du premier et du deuxième paliers d'articulation (1, 1'),
les tiges de poussée étant respectivement basculables vers l'avant en direction des barres d'appui avant, par les paliers d'articulation (1, 1'),
les barres d'appui arrières étant respectivement basculables vers l'avant dans une position de rangement, par les palierss d'articulation (1, 1'), et
les paliers d'articulation (1, 1') étant formés de telle sorte que, lors du basculement vers l'avant des tiges de poussée en direction des barres d'appui avant par transformation par mouvement de rotation, la barre d'appui arrière est automatiquement basculable vers l'avant.

30. Châssis selon la revendication 29, **caractérisé en ce que** celui-ci représente un châssis de poussette.

31. Châssis selon la revendication 29 ou 30, **caractérisé en ce que**, sur l'élément-pont faisant raccordement, au moins une roue avant est montée ou montable de façon centrale ou en ce que les deux barres d'appui arrières disposées de façon symétriquement opposée par rapport à l'axe longitudinal du châssis s'étendent de l'arrière vers l'avant.

32. Utilisation du palier d'articulation conformément à l'une des revendications 1 à 28 sur des châssis, en particulier des poussettes.
